# EUROPEAN PATENT SPECIFICATION

(11) **EP 3 876 719 B1**
(45) Date of publication and mention of the grant of the patent: **22.07.2026**
(21) Application number: 19797760.6
(22) Date of filing: 08.11.2019
(51) Int. Cl.: A01N 31/06, A01N 31/08, A01N 35/04, A01P 7/00, A01N 25/02, A01N 25/22

(54) **INSECT REPELLENT COMPOSITION**
INSEKTENABWEISENDE ZUSAMMENSETZUNG
COMPOSITION INSECTIFUGE

(30) Priority: 09.11.2018 EP 18205498
(43) Date of publication of application: 15.09.2021
(73) Proprietor: Mother Earth Dermatics (MED) GmbH, 80687 München (DE)
(72) Inventor: YOUNES, Samer, 80333 München (DE); KASSAB, Elias, 80333 München (DE); BRÜCK, Thomas, 85452 Moosinning (DE)
(74) Representative: Grünecker Patent- und Rechtsanwälte PartG mbB
(86) International application number: PCT/EP2019/080747
(87) International publication number: WO 2020/094864

(56) References cited:
- EP-A1- 1 417 886
- EP-A1- 1 417 886
- WO-A1-2013/066403
- WO-A1-2013/066403
- US-A1- 2008 020 078
- US-A1- 2008 020 078
- US-A1- 2017 231 231
- US-A1- 2017 231 231
- JUN-HYUNG TAK ET AL: "Acaricidal and repellent activity of plant essential oil-derived terpenes and the effect of binary mixtures against Tetranychus urticae Koch (Acari: Tetranychidae)", INDUSTRIAL CROPS AND PRODUCTS., vol. 108, 1 December 2017 (2017-12-01), NL, pages 786 - 792, XP055536628, ISSN: 0926-6690, DOI: 10.1016/j.indcrop.2017.08.003
- "ChemInform", vol. 25, 20 December 1993, WILEY - V C H VERLAG GMBH & CO. KGAA, DE, ISSN: 0931-7597, article R. F SEVERSON ET AL: "Aphicidal Activity of Cuticular Components from Nicotiana tabacum", pages: 172 - 179, XP055536647, DOI: 10.1002/chin.199421318
- WOLFGANG MISCHKO ET AL: "Modular biomanufacturing for a sustainable production of terpenoid-based insect deterrents", GREEN CHEMISTRY, vol. 20, no. 11, 14 May 2018 (2018-05-14), GB, pages 2637 - 2650, XP055536661, ISSN: 1463-9262, DOI: 10.1039/C8GC00434J
- SAROGLOU V ET AL: "Analysis of the essential oil composition of eight Anthemis species from Greece", JOURNAL OF CHROMATOGRAPHY A, ELSEVIER, AMSTERDAM, NL, vol. 1104, no. 1-2, 3 February 2006 (2006-02-03), pages 313 - 322, XP024968297, ISSN: 0021-9673, [retrieved on 20060203], DOI: 10.1016/J.CHROMA.2005.11.087
- ELHAM RASSOULI ET AL: "The Essential Oil Composition of Cleome brachycarpa Vahl ex DC", JOURNAL OF ESSENTIAL OIL-BEARING PLANTS, vol. 17, no. 1, 2 January 2014 (2014-01-02), IN, pages 158 - 163, XP055536669, ISSN: 0972-060X, DOI: 10.1080/0972060X.2014.884784
- BEN HASSINE DORSAF ET AL: "Chemical composition of some Tunisian Eucalyptus essential oils as obtained by hydrodistillation using Clevenger type apparatus", BIOSCIENCES, BIOTECHNOLOGY RESEARCH ASIA, vol. 7, no. 2, 1 January 2010 (2010-01-01), pages 647 - 656, XP055536679
- H FADEL ET AL: "ORIGINAL PAPER", Z LEBENSM UNTERS FORSCH A, 1 January 1999 (1999-01-01), pages 212 - 216, XP055536685, Retrieved from the Internet <URL:https://link.springer.com/content/pdf/10.1007/s002170050405.pdf>
- PARK YOUNG-UK ET AL: "Chemical Composition, Larvicidal Action, and Adult Repellency of Thymus magnus Against Aedes albopictus", JOURNAL OF THE AMERICAN MOSQUITO CONTROL ASSOCIATION : MOSQUITO NEWS, vol. 28, no. 3, 1 September 2012 (2012-09-01), US, pages 192 - 198, XP093063406, ISSN: 8756-971X, Retrieved from the Internet <URL:http://dx.doi.org/10.2987/12-6250R.1> DOI: 10.2987/12-6250R.1
- JUN-HYUNG TAK ET AL: "Acaricidal and repellent activity of plant essential oil-derived terpenes and the effect of binary mixtures against Tetranychus urticae Koch (Acari: Tetranychidae)", INDUSTRIAL CROPS AND PRODUCTS., vol. 108, 1 December 2017 (2017-12-01), NL, pages 786 - 792, XP055536628, ISSN: 0926-6690, DOI: 10.1016/j.indcrop.2017.08.003
- "ChemInform", vol. 25, 20 December 1993, WILEY - V C H VERLAG GMBH & CO. KGAA, DE, ISSN: 0931-7597, article R. F SEVERSON ET AL: "Aphicidal Activity of Cuticular Components from Nicotiana tabacum", pages: 172 - 179, XP055536647, DOI: 10.1002/chin.199421318
- WOLFGANG MISCHKO ET AL: "Modular biomanufacturing for a sustainable production of terpenoid-based insect deterrents", GREEN CHEMISTRY, vol. 20, no. 11, 14 May 2018 (2018-05-14), GB, pages 2637 - 2650, XP055536661, ISSN: 1463-9262, DOI: 10.1039/C8GC00434J
- SAROGLOU V ET AL: "Analysis of the essential oil composition of eight Anthemis species from Greece", JOURNAL OF CHROMATOGRAPHY A, ELSEVIER, AMSTERDAM, NL, vol. 1104, no. 1-2, 3 February 2006 (2006-02-03), pages 313 - 322, XP024968297, ISSN: 0021-9673, [retrieved on 20060203], DOI: 10.1016/J.CHROMA.2005.11.087
- ELHAM RASSOULI ET AL: "The Essential Oil Composition of Cleome brachycarpa Vahl ex DC", JOURNAL OF ESSENTIAL OIL-BEARING PLANTS, vol. 17, no. 1, 2 January 2014 (2014-01-02), IN, pages 158 - 163, XP055536669, ISSN: 0972-060X, DOI: 10.1080/0972060X.2014.884784
- BEN HASSINE DORSAF ET AL: "Chemical composition of some Tunisian Eucalyptus essential oils as obtained by hydrodistillation using Clevenger type apparatus", BIOSCIENCES, BIOTECHNOLOGY RESEARCH ASIA, vol. 7, no. 2, 1 January 2010 (2010-01-01), pages 647 - 656, XP055536679
- H FADEL ET AL: "ORIGINAL PAPER", Z LEBENSM UNTERS FORSCH A, 1 January 1999 (1999-01-01), pages 212 - 216, XP055536685, Retrieved from the Internet <URL:https://link.springer.com/content/pdf/10.1007/s002170050405.pdf>

## Description

### Field of the invention

The invention relates to a pest repellent composition, comprising thymol, vanillin, 1,5-pentanediol and optionally cembratriene-ol (CBT-ol). The specification further discloses methods of treating various articles with such compositions. The invention further relates to a method of repelling a pest involving application of the above compositions. The specification further discloses methods for preventing pest-bome diseases including application of the above compositions. The specification further discloses the above compositions for use in methods of preventing pest-bome diseases. The invention further relates to a method of preparing the above composition, as well as a composition prepared by, or preparable by, such method.

The specification further discloses a pest control apparatus for distributing the above compositions.

The pest repellent composition of the present invention may be safely applied to i.a. infants as well as pregnant and lactating women, as well as the general human population. The pest repellent composition of the present invention may be safely applied to animals. The pest repellent composition of the present invention may also be safely used as a household pest repellent, as well as for the protection of agricultural crops from harmful pests.

### Background of the invention

Far from being a mere inconvenience in causing irritation and pain, pest, e.g. insect, bites may pose serious health risks. The ability of insects and other pests to transmit bacteria, viruses and other vectors is well documented. For example, mosquitoes, while drinking the blood of human hosts, can transmit pathogens and viral particles into the blood stream. Pathological conditions such as malaria, yellow fever, Lyme disease, and Dengue fever among others are attributed to mosquito bites. Yearly, these diseases are responsible for thousands of mortalities around the world. *Aedes Aegypti,* also known as the yellow fever mosquito since it is a vector for the yellow fever virus, is mainly found in tropical and subtropical regions around the word. However, recent studies has shown its presence in continental regions such as Germany and France. *Aedes Aegypti* is diurnal and anthropophilic. It is also a vector for dengue fever and the Zika virus. So far, no commonly available immunization against this species exists. A topical mosquito repellent effective against this species ensures protection against viral transmission.

As is also well known, ticks are the vector responsible for transmitting Lyme disease, and fleas can transmit plague to humans.

Over the years, synthetic compounds such as N,N-diethyl-m-toluamide (DEET) have been used as insect repellents. Regarded as the industry standard in topical insect repellents, DEET is highly effective over prolonged periods of time. However, it can in some instances cause irritation of the skin, eyes and mucus membranes. Recently, toxicity concerns were raised related to the use of DEET especially on sensitive groups like young children and pregnant or lactating women. Regulatory reassessments in North America have been conducted for DEET-containing insect repellents. Such reassessments have resulted in labeling changes and dosage advice in order to minimize unwanted exposure to these sensitive groups.

Other pest repellent compounds include 1-(1-Methylpropoxycarbonyl)-2-(2-hydroxyethyl)piperidine (known alternatively as icaridin, picaridin and KBR3032), as well as 3-[N-butyl-N-acetyl]-aminopropionic acid, ethyl ester (known alternatively as EBAAP, ethyl butylacetylaminopropionate and Insect Repellant 3535) raise similar safety concerns.

Natural essential oils such as citronella, eucalyptus, lavender and limonene have also been used as insect repellents. Their repellency capability is often strong initially but, due to their high volatilities, these repellents lack long-term efficacy, and have a protection time ranging from only 30 minutes to 2 hours. Furthermore, unrefined essential oils contain a blend of compounds, some of which, albeit present in minute concentrations, can still cause health risks for sensitive groups, such as infants, pregnant and lactating women. These compounds are considered allergens, thus doctors recommend avoiding the use of natural essential oils for infants, as well as for pregnant or lactating women.

Park Young-Uk et. al.: Journal of the American Mosquito Control Association, vol. 28, no. 3, (2012-09-01), pages 192-198, discloses high and long lasting repellency of the composition comprising 0.05 % thymol and 0.1 % vanillin in ethanol when applied to the skin against female of *Aedas albopictus.*

US 2008/020078 A1 discloses insecticidal and insect repellent compositions comprising: thymol 20 %; vanillin 1 %, geraniol 20 %, methyl salicylate 39 %, isopropyl myristate 20 % and water based variants diluted 1:1 with water and surfactant.

US 2017/231231 A1 discloses an insect repellent composition containing: 0.1-65 % thymol, 0.1-50 % methyl salicylate or wintergreen oil, 1-25 % 1,8-cineol, 0.1-35 % triethyl citrate, 1-25 % lemon grass oil, 1-8% vanillin.

JUN-HYUNG TAK et. al.: INDUSTRIAL CROPS AND PRODUCTS., vol. 108, (2017-12-01), pages 786-792 discloses synergistic insecticidal and repellent compositions containing: 1 % of 1:1 combination thymol and vanillin in acetone.

WO 2013/066403 A1 discloses alcohol free botanical hand disinfectant lotion containing *inter alia:* 0.2 % pantadienol 0.05-3 % thymol, cellulose derivative 0.05-0.3 %, 60-94.6 % water and many stabilisers (antioxidants) and organic solvents.

EP 1 417 886 A1 discloses 1,5-pentanedienol as suitable solvents for phenolic insect repellents.

There is thus a need for pest repellents which are effective for extended periods of time, while at the same time posing no health risk for sensitive groups such as those mentioned above. It is an object of the invention to address such needs.

### Object of the invention

Specifically, one object of the invention is to provide a composition, for example a pest repellent composition, for example a pest repellent composition for topical administration, that can be advantageously and safely applied on infants as well as on pregnant or lactating women. Such application may be either directly (e.g. on the skin) or indirectly (e.g. on clothing). Another object of the invention is to provide a safe composition, for example a pest repellent composition, that can be applied copiously to the face and skin of a person. Yet another object of the invention is to provide a composition, for example a pest repellent composition, that can be safely applied and reapplied continuously throughout the day, that is repeatedly. Another object of the invention is to provide a composition, for example a pest repellent composition, that has a long-lasting pest-repellent effect. Still another object of the invention is to provide a composition, for example a pest repellent composition, to repel vector-carrying pests such as mosquitos and other insect pests such as flies, as well as arachnid pests such as ticks. Yet another object of the invention is to provide a composition, for example a pest repellent composition, that has an attractive scent. Yet another object of the invention to provide a composition, for example a pest repellent composition, that can be safely applied on animals, e.g. livestock. A further object of the invention is to provide an environmentally safe and biodegradable composition, for example a pest repellent composition, for agricultural crop protection from harmful pests. Another object of the invention is to provide a composition, for example a pest repellent composition, that can be sprayed on or nearby agricultural crops intended for consumption by humans or livestock. Yet another object of the invention is to provide a composition, for example a pest repellent composition, capable of repelling agricultural pests such as thrips, white flies, aphids, moths and spider mites. Yet another object of the invention is to provide a composition, for example a pest repellent composition, that is environmentally safe and suitable for use as a household repellent. Other objects and advantages of the invention will be referred to in the detailed description that follows.

The compositions, for example pest repellent compositions, as well as methods and uses involving such compositions described below, satisfy the above aims.

### Summary of the invention

The subject matter of the invention is as set out in the appended claims.

One aspect of the invention relates to a pest repellent composition comprising thymol, a stabilizer and a solvent, and further optionally comprising cembratriene-ol (CBT-ol),
wherein the stabilizer is vanillin,
wherein the respective thymol:vanillin ratio is between 1:1 - 1:3, preferably 1:2,
wherein the thymol concentration is 5 - 40 % (w/w), preferably 15 - 20 % (w/w),
wherein the solvent is an alpha-omega alkyl diol, and wherein the alpha-omega alkyl diol is 1,5-pentanediol and is present in a concentration of 20 - 70% (w/w).

A further aspect of the invention relates to a method of preparing a composition comprising solubilized thymol, a solubilized stabilizer, an alpha-omega alkyl diol as a solvent, wherein the alpha-omega alkyl diol is 1,5-pentanediol and is present in a concentration of 20 - 70% (w/w), and, optionally, solubilized cembtatriene-ol (CBT-ol), wherein the stabilizer is vanillin, wherein the respective thymol:vanillin ratio is between 1:1 - 1:3, preferably 1:2, and wherein the thymol concentration is 5 - 40 % (w/w), preferably 15 - 20% (w/w),
said method comprising
- mixing the thymol, the stabilizer, and the alpha-omega alkyl diol, and, if present, the CBT-ol; and
- dissolving the thymol, the stabilizer, and, if present, CBT-ol in the alpha-omega alkyl diol by incubating the mixture at a temperature and for a duration of time sufficient to solubilize the thymol, the CBT-ol if present, and the stabilizer in the alpha-omega alkyl diol.

A further aspect of the invention relates to a composition prepared by the method of the invention.

A further aspect of the invention relates to a method of repelling a pest, comprising:
applying an effective repellent amount of the pest repellent composition of the invention or the composition prepared by the method of the invention to a surface, wherein the surface is a surface of an article; and
repelling the pest, wherein the pest belongs to a class selected from the group consisting of *insecta* and *arachnida.*

Preferred embodiments are set forth in the dependent claims.

The following aspects and embodiments are general and broader than the invention defined in claims.

The specification generally discloses a pest repellent composition, comprising thymol and optionally cembratriene-ol (CBT-ol), a stabilizer and a solvent. In a preferred embodiment, the composition does not comprise, i.e. lacks, N,N-diethyl-m-toluamide (DEET). In another preferred embodiment, the composition does not comprise, i.e. lacks, 1-(1-Methylpropoxycarbonyl)-2-(2-hydroxyethyl)piperidine (icaridin). In another preferred embodiment, the composition does not comprise, i.e. lacks, 3-[N-butyl-N-acetyl]-aminopropionic acid, ethyl ester (EBAAP). In another preferred embodiment, the composition does not comprise, i.e. lacks, any binary or tertiary combination of DEET, icaridin and EBAAP. In an especially preferred embodiment, the composition does not comprise, i.e. lacks, each of DEET, icaridin and EBAAP.

The specification further generally discloses a method of preparing a composition comprising solubilized thymol and optionally solubilized cembtatriene-ol (CBT-ol), a solubilized stabilizer and a solvent, said method comprising: mixing the thymol and optionally the CBT-ol, the stabilizer, and the solvent; and dissolving the thymol and optionally the CBT-ol, and the stabilizer in the solvent by incubating the mixture at a temperature and for a duration of time sufficient to solubilize the thymol and optionally the CBT-ol, and the stabilizer in the solvent. In certain embodiments, the method further comprises recovering the composition once dissolved. In a preferred embodiment, the composition does not comprise, i.e. lacks, N,N-diethyl-m-toluamide (DEET). In another preferred embodiment, the composition does not comprise, i.e. lacks, 1-(1-methylpropoxycarbonyl)-2-(2-hydroxyethyl)piperidine (icaridin). In another preferred embodiment, the composition does not comprise, i.e. lacks, 3-[N-butyl-N-acetyl]-aminopropionic acid, ethyl ester (EBAAP). In another preferred embodiment, the composition does not comprise, i.e. lacks, any binary or tertiary combination of DEET, icaridin and EBAAP. In an especially preferred embodiment, the composition does not comprise, i.e. lacks, each of DEET, icaridin and EBAAP.

The specification further generally discloses a composition prepared by, or preparable by the above method.

The specification further discloses a method of treating an article, for example a fabric or an article of clothing, with the above composition. Preferably, said treatment is with an amount of the above composition effective to repel pests.

The specification further discloses a method of treating an agricultural product, e.g. a crop with the above composition. Preferably, said treatment is with an amount of the above composition effective to repel pests.

The specification further generally discloses a method of repelling a pest, said method comprising applying the above composition, preferably the above pest repellent composition to a surface which is to be kept pest-free. Preferably, said application is with an amount of the above composition effective to repel pests. Preferably, said surface is the surface of skin or the surface of an article, set article preferably being a fabric or an article of clothing.

The specification further discloses a use of the above composition in the manufacture of a pest repellent. In a related aspect, the invention relates to the use of the above composition as a pest repellent.

The specification further discloses a method of preventing a pest-borne disease, said method comprising applying the above composition, preferably the above pest repellent composition, to a human or non-human animal. The specification further discloses the above composition, preferably the above pest repellent composition, for use in a method of preventing a pest-borne disease, said method comprising applying the above composition, preferably the above pest repellent composition to a human or non-human animal.

The specification further discloses a fragrance composition comprising the above composition, preferably the above pest repellent composition, and additionally comprising one or more fragrance substance and/or fragrance enhancer.

The specification further discloses an apparatus, preferably a pest control apparatus, said apparatus comprising a main body defining an inner space and comprising at least one vent hole, said main body comprising within said inner space a carrier disposed at one or more locations within said inner space of said main body, said carrier comprising the above composition, preferably the above pest repellent composition.

### Description of the figures

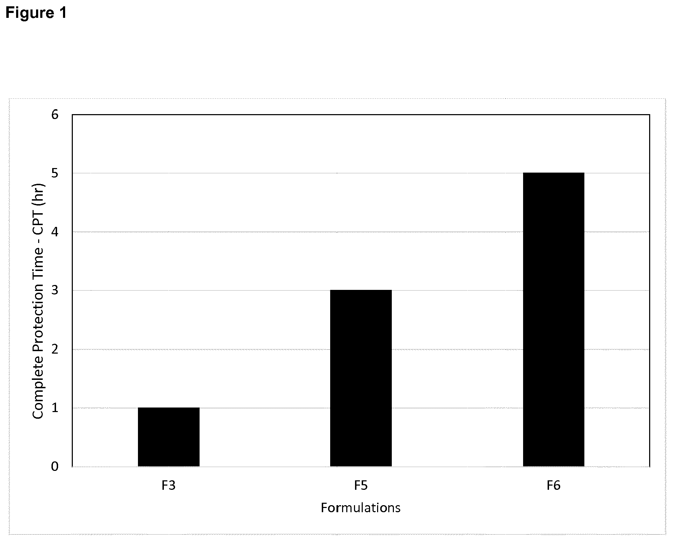

Figure 1: Complete protection time (CPT) of various formulations against Aedes Aegypti. A formulation F3 with 5% w/w thymol as active ingredient provided a CPT of 1 hr. A formulation F5 with 12.5% w/w thymol as active ingredient provided a CPT of 3 hrs. A formulation F6* with 15% w/w thymol as active ingredient provided a CPT of 5 hrs.

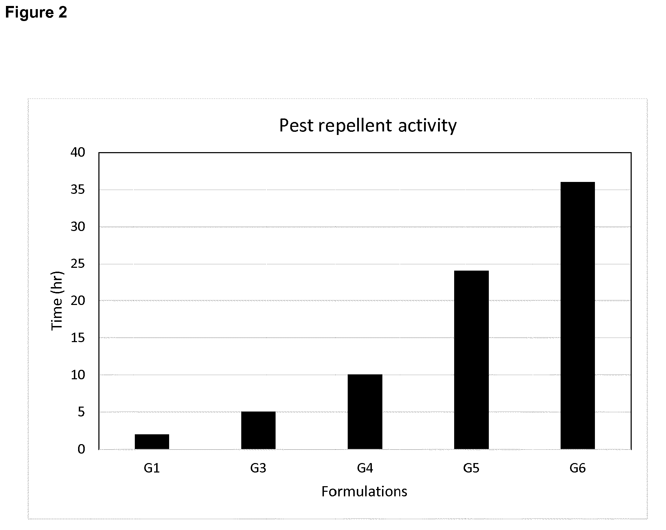

Figure 2: Pest-repellent activity of various formulations in an agricultural setting. A formulation G1 with 0.1% w/w CBT-ol as active ingredient provided a pest repellent activity of about 2 hrs. A formulation G3 with 0.5% w/w CBT-ol as active ingredient provided a pest repellent activity of about 5 hrs. A formulation G4 with 1% w/w CBT-ol as active ingredient provided a pest repellent activity of about 10 hrs. A formulation G5 with 5% w/w CBT-ol as active ingredient provided a pest repellent activity of about 24 hrs. A formulation G6 with 10% w/w CBT-ol as active ingredient provided a pest repellent activity of about 36 hours.

### Detailed description of the invention

### Definitions and terminology

All technical and scientific terms used hereafter carry the commonly understood meaning of the word unless defined otherwise.

The section headings as used throughout the present application are merely for organizational purposes, and do not confer exclusive character to the disclosure pertaining to aspects of the invention mentioned in a section headings. Section headings thus do not exclude the combination of the disclosure within any one section heading to a corresponding or analogous context provided under another section heading.

As used herein, each of the terms "comprising', "having" and "containing", including grammatical variants thereof, are meant in a non-exhaustive sense to mean "including", but not necessarily "composed of", and does not exclude elements in addition to those explicitly recited as being present. As used herein, then, the terms "comprising", "having" and "containing", and grammatical variants thereof, indicate that components other than those explicitly recited may, but need not, be present. As such these terms include as a limiting case embodiments in which no other elements than those recited are present, e.g. in the commonly accepted sense of "consisting of". As used herein, the phrase "consisting of", and grammatically related variants thereof, means that no other elements are present in those recited. In standing with the above definition of "comprising" (and grammatically and semantically related terms), the term "consisting of" therefore denotes a limiting scenario within the meaning of "comprising".

Unless stated otherwise, percentages indicating the extent to which a particular ingredient is comprised in a mixture or composition refer to weight/weight (w/w) percentages. Similarly, unless stated otherwise, ratios specified herein are weight ratios.

As used herein, the term "natural origin" indicates a form of a substance *per se* as it is isolated from nature, without further chemical modification. The term "natural origin" as used herein does not denote degrees of purity. For example, a substance which is used in the present invention in a concentration or degree of purity higher than that naturally found in nature, but in which a given molecule of that substance in higher concentration/purity remains chemically identical to a given molecule of the corresponding substance in nature in lower concentration/purity would still be considered of "natural origin" in the sense used herein. Such substances to be used in the present invention may either be extracted from their natural states via appropriate known methods or can be synthetically produced, both variants being within the meaning of "natural origin" as used herein.

As used herein, a "pest" is denotes animal detrimental to humans or human interests including an animal which is detrimental to crops or livestock. Such "pests" may serve as vectors for disease. In particular, a "pest" as used herein may be a member of the class *insecta,* i.e. an insect, for example a mosquito, for example a mosquito of the subfamily *Anophelinae* or *Culicinae*, for example belonging to the genus *Aedeomyia*, *Aedes*, *Anopheles, Armigeres, Ayurakitia, Borachinda, Coquillettidia, Culex, Culiseta, Deinocerites, Eretmapodites, Ficalbia, Galindomyia, Haemagogus, Heizmannia, Hodgesia, Isostomyia, Johnbelkinia, Kimia, Limatus, Lutzia, Malaya, Mansonia, Maorigoeldia, Mimomyia, Onirion, Opifex, Orthopodomyia, Psorophora, Runchomyia, Sabethes, Shannoniana, Topomyia, Toxorhynchites, Trichoprosopon, Tripteroides, Udaya, Uranotaenia, Verrallina, or Wyeomyia.* An insect "pest" as used herein may also for example be a flea, for example a flea of the order *Siphonaptera.* An insect "pest" as used herein may also for example be a fly, for example a fly of the order *Diptera.* An insect "pest" as used herein may also for example be an aphid, for example an aphid of the order *Hemiptera*, for example belonging to the suborder *Sternorrhyncha*, for example belonging to the infraorder *Aphidomorpha*, for example belonging to the Superfamily *Aphidoidea.* A "pest" as used herein may also be a member of the class *arachnida,* i.e. an Arachnida, for example a tick, for example belonging to the genus *Amblyomma, Anomalohimalaya, Bothriocroton, Cosmiomma, Cornupalpatum, Compluriscutula, Dermacentor, Haemaphysalis, Hyalomma, Ixodes, Margaropus, Nosomma, Rhipicentor, Rhipicephalus, Antricola, Argas, Nothoaspis, Ornithodoros, Otobius* or *Nuttalliella.* A "pest" as used herein may also be a member of the class *arachnida,* , i.e. an Arachnida, for example a chigger or *Trombiculidae*, for example belonging to the genus *Acomatacarus, Afropolonia, Anahuacia, Ascoschoengastia, Axiogastia, Blankaartia, Brunehaldia, Chatia, Cheladonta, Doloisia, Euschoengastia, Eutrombicula, Gahrliepia, Guntherana, Guntheria, Hannemania, Heaslipia, Hirsutiella, Kayella, Leptotrombidium, Microtrombicula, Miyatrombicula, Neoschoengastia, Neotrombicula, Novotrombicula, Ornithogastia, Parasecia, Pseudoschoengastia, Schoengastiella, Schoutedenichia, Speleocola, Trombicula* or *Whartonia.*

As used herein, a "pest repellent" is a substance which causes a pest to distance itself from the source of such a repellent. As a result, a "pest repellent" or "insect repellent" as used herein is a substance which has the effect of discouraging pests from landing or climbing on a surface or from eating a food, to which such a repellent has been applied. In a similar sense, "pest repellent composition" as used herein denotes a composition which has pest repellent activity, or is suitable for conferring pest repellent activity, in the above sense, on surfaces or objects or articles of manufacture treated with said composition. It is understood that even a composition containing a very low concentration of a substance or substances with pest repellent activity may qualify that composition as a "pest repellent composition" if such composition can confer pest repellent activity to an object or article to which it is applied by repeated treatment or application of such composition so as to deposit a total cumulative amount , i.e. an "effective amount", of said substance or substances sufficient to endow said surface, object, article or food with pest repellent activity. It will however generally be preferred that a composition according to the invention contains a sufficient amount of active pest repellent substance or pest repellent substances to result in pest repellent activity following a single application of said composition to a surface or article of manufacture to which pest repellent activity is to be conferred. For example, a composition comprising a pest repellent substance or pest repellent substance combination, will be seen as itself having "pest repellent" activity if, after a single application of such composition the duration of time between application and the first pest bite and or predation is at least about 2 hours, at least about 3 hours, at least about 4 hours, at least about 5 hours for at least about 6 hours. Preferably, said duration of time is at least about 6, about 7 or about 8 hours.

As used herein, the term "effective amount", and grammatically related variants, refers to an amount of the composition, preferably an amount of the pest repellent composition, that results in a certain observable effect, for example a certain pest repellent effect. For instance, an "amount" of a composition "effective" to achieve pest repellent activity denotes an amount of the composition which leads to an empirical, quantifiable decrease in the propensity of at least one type of pest to alight or crawl on surfaces or articles, or to eat a substance, e.g. a food, treated with such a composition. Preferably, an amount of a pest repellent composition "effective" to repel a pest retains its initially observed effect for at least about 2, about 3, about 4, about 5 or about 6 hours. Preferably, the initially observed effect lasts for at least about 6, about 7 or about 8 hours.

In a related sense, the term "repellent activity", and related terms such as "insect repellent activity" and "pest repellent activity", are used interchangeably herein and refer to the degree to which a repellent can deter a pest from approaching or landing on a surface or an article to which that repellent has been applied. The referenced activity may for example be quantified in terms of the number of pests approaching, landing or crawling on a treated surface or article in comparison to a non-treated surface or article. Alternatively, the referenced activity may be quantified in terms of the duration of time after which an initially determined repellent activity diminishes, and initially deterred pests once again approach, crawl or land on a previously treated surface or article. It is understood that compositions of the invention with a pest repellent activity help prevent and control the outbreak of insect-bome diseases such those set out herein. In the context of the invention, a "long repellent activity" is defined as an activity that lasts at least about 6 hours, at least about 7 or at least about 8 hours.

As used herein, a "pest-bome disease" or grammatically and semantically equivalent terms, refer to any disease which results from a pest's interaction with a host, as for example resulting from a mosquito sucking blood from a host. Non-limiting examples of "pest-borne diseases" include malaria, Lyme disease, Dengue fever, yellow fever, Zika virus, lymphatic filariasis, Japanese encephalitis, West Nile virus, chikungunya, filariasis, tularemia, dirofilariasis, Saint Louis encephalitis, Western equine encephalitis, Eastern equine encephalitis, Venezuelan equine encephalitis, Ross River fever, Barmah Forest fever, La Crosse encephalitis, Crimean-Congo haemorrhagic fever, Relapsing fever, Rickettsial diseases (e.g. spotted fever and Q fever), Tick-borne encephalitis, Tularaemia and plague and Rickettsiosis. For example, mosquitoes are known to transmit malaria, Dengue fever, yellow fever Zika virus, among others, while tics are known to transmit tick-borne encephalitis, Lyme disease, borreliosis, Rickettsial diseases (e.g. spotted fever and Q fever) and Tularaemia.

Unless stated otherwise, the designation of a range in the present application using a hyphen ("-") separating two bracketing values X and Y, or two bracketing ratios, is to be understood as meaning and disclosing the specified range in which both endpoint values X and Y are included. The same applies to a range expressed as "from X to Y". Accordingly, the expressions of ranges as "X - Y", "of X to Y", "from X to Y", "of X - Y" and "from X - Y" are to be understood equivalently as meaning and disclosing a range encompassing the end value X, all values between X and Y, as well as the end value Y. In contrast, the designation of a range in the present application using the word "between" preceding two bracketing values X and Y, or two bracketing ratios, is to be understood as meaning and disclosing the specified range in which both endpoint values X and Y are excluded, but all values between the specified endpoint values X and Y are included.

As used herein the term "about" when referring to a particular value, e.g. an endpoint or endpoints of a range, encompasses and discloses, in addition to the specifically recited value itself, a certain variation around that specifically recited value. Such a variation may for example arise from normal measurement variability, e.g. in the weighing or apportioning of various substances by methods known to the skilled person. The term "about" shall be understood as encompassing and disclosing a range of variability above and below an indicated specific value, said percentage values being relative to the specific recited value itself, as follows: The term "about" may encompass and disclose variability of ± 5.0%. The term "about" may encompass and disclose variability of ± 4.5%. The term "about" may encompass and disclose variability of ± 4.0%. The term "about" may encompass and disclose variability of ± 3.5%. The term "about" may encompass and disclose variability of ± 3.0%. The term "about" may encompass and disclose variability of ± 2.5%. The term "about" may encompass and disclose variability of ± 2.0%. The term "about" may encompass and disclose variability of ± 1.5%. The term "about" may encompass and disclose variability of ± 1.0%. The term "about" may encompass and disclose variability of ± 0.5%. The term "about", in reference to the particular recited value, may encompass and disclose that exact particular value itself, irrespective of any explicit mention that this exact particular value is included; even in the absence of an explicit indication that the term "about" includes the particular exact recited value, this exact particular value is still included in the range of variation created by the term "about", and is therefore disclosed in the present application. Unless stated otherwise, where the term "about" is recited before the first endpoint of a numerical range, but not before the second endpoint of that range, this term, and the variability it implies in scope and disclosure, refers to both the first endpoint of the range and the second endpoint of the range. For instance, a recited range of "about X to Y" should be read as "about X to about Y". The same applies for a recited range of ratios. For instance, a recited range of weight ratios of "about X:Y - A:B" should be read as a weight ratio of "(about X):(about Y) - (about A):(about B)".

As used herein, a "solvent" in the sense of the invention is defined as a substance in which a solute is dissolved, resulting in a solution. Dissolution of a solute does not entail any chemical change in a given solute molecule, but rather a separation of the individual molecules within a solute from its interaction, e.g. in a solid, with other molecules of that solute, such that the individual solute molecules, in the final solubilized state, are stabilized by the molecules of the solvent. A "solvent" in the sense of the invention is thus a substance which provides the necessary stabilization to solute molecules such that the latter enter into and remain in solubilized form.

As used herein, a "diluent" does not actively participate in solubilization of a solute, but serves merely to adjust overall composition volume and, therefore, solute concentration, as desired or needed.

As used herein, an "article" or, equivalently, an "article of manufacture" denotes an object which, regardless of its complexity, is inanimate, i.e. not alive. Many examples of "articles", for example "articles of clothing", as well as "articles of manufacture" are provided herein as being particularly suitable for treatment with the inventive composition, e.g. the inventive pest repellent composition. It is however to be understood that the articles specifically mentioned herein are merely exemplary, and that it can be advantageous to treat many articles with the inventive composition, e.g. to endow such an article with pest repellent activity.

As used herein, a "solid" is a substance which does not freely flow, and the shape of which does not change, at room temperature, e.g. as a liquid or a fluid would. Many substances which are "solid" in this sense may nevertheless be dissolved in a solvent.

As used herein, a "liquid" is a substance which flows freely at room temperature, such that its shape changes but its volume retains constant, e.g. as would water or an oil.

As used herein, "room temperature" denotes a typical ambient indoor temperature of about 25°C.

As used herein, the term "active ingredient" denotes a substance that has pest repellent activity, as described above.

As used herein, the term "micellar water" denotes a solution that comprises a dispersion of micelles, which are aggregates of amphiphiles, or surfactant molecules, in usually water.

As used herein, the term "vent hole" in the sense of the invention is defined as a hole for the escape of gas or air, e.g. gas comprising the composition of the invention.

As used herein, the terms "toxicity", "toxic" and grammatical variants thereof are used to describe the harmful effect of a substance or mixture of substances on an organism. Toxic effects may for example include rashes of the skin, skin irritation, numb or burning lips, nausea, headaches, dizziness and difficulty concentration. "Toxicity" as used herein may however also refer to more widespread systemic effects such as poisoning, because of an inability of an organism to break down a given substance, for example leading to an accumulation of that substance, or degradation intermediates thereof, in the organism, and ultimately having a detrimental effect on the normal functioning of that organism. The classification of a substance in question as toxic can be made based on established standards, e.g. the REACH (**R**egistration, **E**valuation, **A**uthorisation and Restriction of **Ch**emicals) regulation.

As used herein, the term "safe", "safety" and grammatical variants thereof denotes a situation or characteristic of a substance as not likely to cause or lead to harm or injury under applicable standards. In particular, "safe application" as used herein refers to the application of the composition of the invention, for example the pest repellent composition of the invention, that results in no or no appreciable adverse or toxic effects, such as irritation of the skin or lungs upon application, for example repeated application, or inhalation. "Safe application" as used herein further refers to the possibility that the insect repellent of the invention may be applied repeatedly even in infants, children and pregnant or lactating women, who normally constitute the population most susceptible to adverse effects due to toxic ingredients. The classification of a substance in question as safe can be made based on established standards, e.g. the REACH (**R**egistration, **E**valuation, **A**uthorisation and Restriction of **Ch**emicals) regulation.

In the current invention the "stabilizer" is vanillin. The term "stabilizer" denotes a substance that prevents the degradation or unwanted chemical alteration of an active agent which is present in the same composition as the stabilizer, thereby preserving the chemical nature of the active agent. A stabilizer might for example exert its stabilizing effect by fixating, e.g. prolonging, the persistence time of a given substance in a given phase, e.g. to prevent evaporation or to prolong the time required for a given substance to evaporate at a given temperature. Stabilization may be due to forming a physical barrier preventing interaction of a substance with the environment, or may be due to chemical interactions, e.g. pi-electron stacking interactions between aromatic stabilizers and aromatic substances to be stabilized, such that the effective boiling point of such substances to be stabilized is increased relative to their unstabilized state.

As used herein, the term "liposomes" denotes spherical vesicles consisting of one or more phospholipid bilayers, as commonly understood by a person skilled in the art.

As used herein, the term "DEET" is an abbreviation for the chemical name N,N-diethyl-m-toluamide, having the chemical structure:

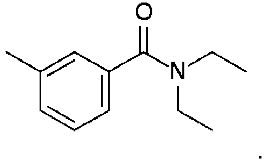

DEET is the active ingredient in many insect repellent of the art, and can be absorbed by the skin. Concerns have been raised over the risk of adverse toxic effects, especially in young children and pregnant women. Although DEET is highly effective and long lasting (e.g. up to 6 - 8 hours depending on the concentration), it cannot be reapplied safely several times during the course of a day due to its toxicity. The adverse effects may include rashes of the skin, skin irritation, numb or burning lips, nausea, headaches, dizziness and difficulty concentration. It is particularly preferred that the inventive composition does not comprise, i.e. lacks DEET.

As used herein, the term "icaridin" refers to the compound 1-(1-Methylpropoxycarbonyl)-2-(2-hydroxyethyl)piperidine, having the chemical structure:

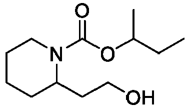

As used herein, the term "EBAAP" refers to the compound 3-[N-butyl-N-acetyl]-aminopropionic acid, ethyl ester, having the chemical structure:

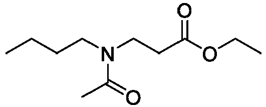

### Compositions

As mentioned above, repellents based on essential oils, which are generally considered as alternative to synthetic products, continue to suffer from high volatilities and low effectiveness after relatively short periods of time. Even in formulations that exhibit long repellency duration (e.g. up to 6 - 8 hours), essential oils can pose risks for sensitive groups such as infants and pregnant and lactating women. Essential oils contain a complex mixture of organic compounds of different chemical classes such as aldehydes, alkenes, aromatic hydrocarbons, phenols and epoxides. Several of these compounds, even if present in minute concentrations, are prohibited for use for sensitive groups such as infants and pregnant and lactating women.

Thus, unlike the complex blends of essential oils, a single pure compound or a combination of two or more compounds, as in the composition of the invention, exhibits a unique and advantageous evaporation profile, specific repellency capabilities and can be tailored in formulations that ensure the safety of sensitive groups.

The invention relates to a pest repellent composition, comprising thymol 5 - 40 % (w/w), a vanillin, and 1,5-pentanediol 20-70 %, and further optionally comprising cembratriene-ol (CBT-ol), wherein the respective thymol:vanillin ratio is between 1:1 - 1:3.

In a preferred embodiment, the composition does not comprise, i.e. lacks, N,N-diethyl-m-toluamide (DEET). In another preferred embodiment, the composition does not comprise, i.e. lacks, 1-(1-Methylpropoxycarbonyl)-2-(2-hydroxyethyl)piperidine (icaridin). In another preferred embodiment, the composition does not comprise, i.e. lacks, 3-[N-butyl-N-acetyl]-aminopropionic acid, ethyl ester (EBAAP). In another preferred embodiment, the composition does not comprise, i.e. lacks, any binary or tertiary combination of DEET, icaridin and EBAAP. In an especially preferred embodiment, the composition does not comprise, i.e. lacks, each of DEET, icaridin and EBAAP.

In addressing the aims described hereinabove, the inventors have surprisingly found that the substances thymol and cembratriene-ol (CBT-ol) each exhibit substantial pest repellent activity. Each of these compounds was carefully selected after research and experimentation in order to achieve the specific goals described above. In the broadest sense, the objective was to attain a formulation that will effectively repel insects yet remains safe for use on infants and children as well as pregnant and lactating women. The compositions of the invention have the particular advantage of being suitable for infants and pregnant and lactating women, with no or no appreciable toxicity under relevant standards (e.g. according to the REACH (**R**egistration, **E**valuation, **A**uthorisation and Restriction of **Ch**emicals) regulation) as compared to insect repellent compositions of the art. The present invention thus overcomes the shortcomings of existing market products in regards to its target niches (e.g. infants and pregnant and lactating women). The present invention provides an insect repellent formulation of natural origin that is safe for human and animal use and can be safely applied and reapplied several times a day, thereby allowing prolonged protection against unwanted pests without any harmful side effects. The present invention provides composition that is environmentally friendly, biodegradable and can be used as household pest repellent as well as for agricultural crop protection. With regard to the environmental friendliness of the inventive composition, it is to be additionally noted that the inventive composition is not toxic to bees.

The composition of the present invention may be used in manufacturing various products with repellent properties. The composition of the invention may be supplemented into a sunscreen lotion, thus providing a multipurpose lotion. The present formulation may not require shaking prior to each use. A similarly advantageous multipurpose composition is also contemplated as a fragrance composition (e.g. a cologne, a perfume, an *eau de toilette* or an aftershave), a skincare product (e.g. a moisturizer), a cosmetic skin product (e.g. a concealer, powder, rouge, eyeshadow, eyeliner or other type of makeup) or a haircare product (e.g. a shampoo, a conditioner, a styling gel, a styling cream, a styling mousse or a hair tonic). All such products are contemplated and disclosed as benefiting from incorporation of the inventive composition itself, so as to advantageously combine pest repellency with any number of other applications, cosmetic or otherwise.

In preferred embodiments, the inventive composition retains a pest repellent activity for at least about 4 hours. In other preferred embodiments, the inventive composition retains a pest repellent activity for at least about 5 hours. In other preferred embodiments, the inventive composition retains a pest repellent activity for at least about 6 hours. Especially preferred, the inventive composition retains a pest repellent activity for at least about 6 hours, at least about 7 hours or at least about 8 hours.

The inventive composition comprises thymol as the only active ingredient. The inventive composition may also comprise a mixture of thymol and CBT-ol as dual active ingredients. This is what is meant by the language "thymol and optionally CBT-ol" used herein. It is preferred that thymol and CBT-ol, when present together, act synergistically.

**Thymol,** also known as 5-methyl-2-(propan-2-yl)phenol is a natural monoterpene phenolic derivative of cymene. It is found in thyme oil, can be extracted from Thymus vulgaris (common thyme; thymol provides the distinctive flavor of the culinary herb thyme) or may also be synthetically synthesized from m-cresol, among other methods generally known to the skilled person. It possesses a pleasant herbal aroma as well as strong antiseptic properties. Thymol has the following chemical structure:

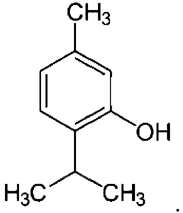

The class of cembranoid diterpenes with a typical macrocyclic C14 backbone was originally reported from the cuticular wax of many Nicotiana species. One particular compound in this class, **cembratriene-ol (CBT-ol)** occurs as alpha- and beta-isomers with absolute configurations determined as (1R,2E,4S,7E,11E)-4-Isopropyl-1,7,11-trimethyl-2,7,11-cyclotetradecatrien-1-ol (α-CBT-ol) and (1S,2E,4S,7E,11E)-4-Isopropyl-1,7,11-trimethyl-2,7,11-cyclotetradecatrien-1-ol (β-CBT-ol), respectively. The bioactivity of this substance was also proven for biotechnologically produced CBT-ol. The following shows the structures of α-CBT-ol and β-CBT-ol, referred to herein simply as "cembratriene-ol", or "CBT-ol":

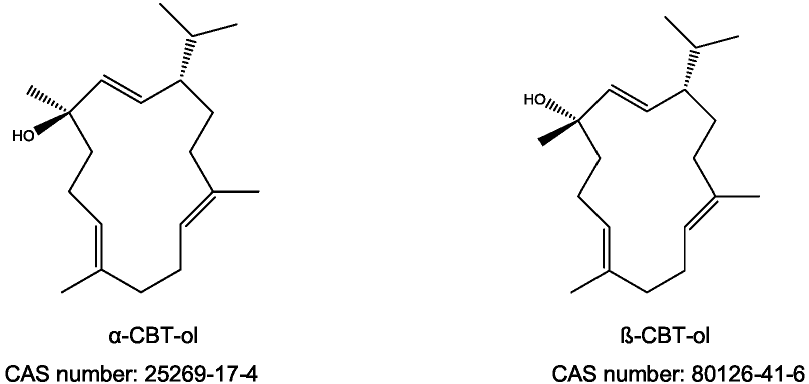

As used herein, the equivalent terms "cembratriene-ol" or "CBT-ol" denote any of the following: α-CBT-ol alone, β-CBT-ol alone, or a mixture of α-CBT-ol and β-CBT-ol in any proportion. For reasons of production efficiency, it may be advantageous that the equivalent terms "cembratriene-ol" or "CBT-ol" denote a mixture of α-CBT-ol and β-CBT-ol in any proportion.

Preferably, the two substances mentioned above, thymol and CBT-ol, are present in the inventive composition, alone or in combination, in an amount of up to 60% w/w, or more preferably up to 50% w/w of the composition of the invention.

Thymol is present in a concentration from 5% to 40% (w/w). In certain embodiments, thymol is present in a concentration from about 25% to about 40% w/w, from about 26% to about 39% w/w, from about 27% to about 38% w/w, from about 28% to about 37% w/w, from about 29% to about 36% w/w, from about 30% to about 35% w/w, from about 31% to about 34% w/w, from about 32% to about 33% w/w. In another particular embodiment of the present invention the thymol concentration is about 10 - 40 % (w/w), preferably about 15 - 20 % (w/w). In especially preferred embodiments of the inventive composition, the composition comprises about 12.5% w/w thymol, about 15% w/w thymol or about 20% w/w thymol. Also part of the invention are compositions according to the invention in which the amount of thymol in the composition is in a range "between" the respective bracketing values of any of the above ranges. It is understood that any of the above amounts of thymol pertains to the amount of thymol with or without CBT-ol in the composition.

In other embodiments, CBT-ol is present in a concentration from about 0.1% to about 40% w/w, from about 0.2% to about 39% w/w, from about 0.3% to about 38% w/w, from about 0.4% to about 37% w/w, from about 0.5% to about 36% w/w, from about 0.6% to about 35% w/w, from about 0.7% to about 34% w/w, from about 0.8% to about 33% w/w, from about 0.9% to about 32% w/w, from about 1% to about 31% w/w, from about 2% to about 30% w/w, from about 3% to about 29% w/w, from about 4% to about 28% w/w, from about 5% to about 27% w/w, from about 6% to about 26% w/w, from about 7% to about 25% w/w, from about 8% to about 24% w/w, from about 9% to about 23% w/w, from about 10% to about 22% w/w, from about 11% to about 21% w/w, from about 12% to about 20% w/w, from about 13% to about 19% w/w, from about 14% to about 18% w/w, from about 15% to about 17% w/w. In especially preferred embodiments of the inventive composition, the composition comprises about 10 % w/w CBT-ol, about 15% w/w CBT-ol. Also part of the invention are compositions according to the invention in which the amount of CBT-ol in the composition is in a range "between" the respective bracketing values of any of the above ranges. It is understood that any of the above amounts of CBT-ol pertains to the amount of CBT-ol with thymol in the composition.

In further embodiments of the invention, the composition comprises thymol in an amount of about 10-40% w/w or preferably about 15-20% w/w, more preferably in an amount of about 15% w/w, with or without CBT-ol. In further embodiments of the invention, the composition comprises CBT-ol in an amount of about 0.1-40% w/w, preferably about 0.5-20%, more preferably about 5-10% w/w, most preferably in an amount of about. In a particularly preferred embodiment, the composition comprises about 15% w/w thymol. In another particularly preferred embodiment, the composition comprises about 20% w/w thymol.

In certain preferred embodiments, the ratio of thymol to CBT-ol is about 1:8 - about 600:1. Preferably, the range of thymol to CBT-ol is about 300:1 - about 100:1, or between about 300:1 and about 100:1; more preferably about 150:1 - about 50:1, or between about 150:1 and about 50:1; more preferably about 30:1 - about 10:1, or between about 30:1 and about 10:1; and more preferably about 5:1 - about 2:1, or between about 5:1 and about 2:1. In order to assure a long lasting repellent composition, these preferred ratios are chosen specifically due to the different evaporation rates of the individual compounds.

The composition according to the invention additionally comprises vanillin as a **stabilizer.** A "stabilizer" is to be understood in the sense set out hereinabove. A further stabilizer may advantageously be at least one compound chosen from the list consisting of: alginate, agar, carrageen, cellulose and cellulose derivatives, gelatin, guar gum, gum Arabic, locust bean gum, pectin, starch, xanthan gum, coconut oil, PPG-20 Methyl Glucose Ether and Acetyl Hexamethyl Indan. Vanillin, also known as 4-hydroxy-3-methoxybenzaldehyde, is a phenolic aldehyde. Naturally occurring as an extract from vanilla bean, synthetic vanillin is used as a flavoring agent in foods, beverages, and pharmaceutical products. Vanillin has the following chemical structure:

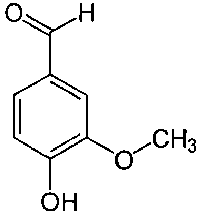

Vanillin is advantageously utilized in the composition of the present invention as a stabilizer, and also simultaneously lends its own pleasant fragrance to the composition, as well as enhances the natural fragrance of other components, i.e. thymol. Without being bound by theory, vanillin appears to prevent the active ingredient(s) from changing its form(s) or chemical nature(s). Without being bound by theory, vanillin may exert its stabilizing, or fixative, effect at least partially via pi-electron stacking interactions between active ingredients and vanillin's phenolic ring, thus decreasing the propensity of thymol and optionally CBT-ol to evaporate and, conversely, thereby increasing the persistence time of thymol and optionally CBT-ol in the inventive composition following application to a surface, article of manufacture or object to which said composition is applied.

The composition, for example the pest repellent composition, of the present invention may comprises a stabilizer in any amount. Preferably, the stabilizer is present in an amount of up to 50% w/w, or more preferably up to 40% w/w of the composition of the invention. For instance, vanillin may be present in the composition of the invention in a concentration of about 5% w/w, about 10% w/w, about 15% w/w, about 20% w/w, about 25% w/w, about 30% w/w, about 35% w/w, about 40% w/w, about 45% w/w, or about 50% w/w of the composition of the invention.

In a particularly preferred embodiment of the invention, the inventive composition, preferably the inventive pest repellent composition, of the invention comprises about 30% w/w vanillin or about 40% w/w vanillin. In a particularly preferred embodiment of the invention, the composition advantageously comprises about 15% w/w thymol and about 30% w/w vanillin. In another particularly preferred embodiment of the invention, the inventive composition, preferably the inventive pest repellent composition, advantageously comprises about 20% w/w thymol and about 40% w/w vanillin. In another particularly preferred embodiment of the invention, the inventive composition, preferably the inventive pest repellent composition, advantageously comprises about 10% w/w CBT-ol and about 20% w/w vanillin. In another particularly preferred embodiment of the invention, the inventive composition, preferably the inventive pest repellent composition, advantageously comprises about 15% w/w thymol, about 15% w/w CBT-ol and about 30% w/w vanillin. In another particularly preferred embodiment of the invention, the inventive composition, preferably the inventive pest repellent composition, advantageously comprises about 15% w/w thymol, about 10% w/w CBT-ol and about 30% w/w vanillin.

The composition of the invention comprises thymol and vanillin, and the thymol:vanillin weight ratio is 1:1 - 1:3. An especially advantageous thymol:vanillin weight ratio in the inventive composition is about 1:2. An especially advantageous CBT-ol:vanillin weight ratio is about 1:2. An especially advantageous ratio of combined thymol and CBT-ol to vanillin is about 1:1.

The vanillin is advantageously of natural origin in the sense set out hereinabove, meaning that, even if produced synthetically, the chemical structure of vanillin to be used in the inventive composition is chemically indistinguishable from vanillin isolated directly from natural sources. Of course, the vanillin in the inventive composition can also be isolated from natural sources. In one embodiment, vanillin is incorporated into the inventive composition in purified form.

The composition, e.g. the pest repellent composition, of the present invention also comprises a **solvent.** The solvent of the composition of the invention is 1,5-pentanediol and a further solvent may be selected from the group consisting of oil, or an organic solvent, and may be hydrophilic, hydrophobic or amphiphilic in nature. Preferred further solvents include jojoba oil, sulfonated castor oil, ethanol, isopropanol, hexadecane, propylene glycol, propylene glycol n-butyl ether, propylene glycol methyl ether acetate, propylene glycol methyl ether, dipropylene glycol n-propyl ether, ethylene glycol methyl ether and hexylene glycol or any combination thereof. Another preferred solvent is glycerol, preferably in a concentration of about 10 - 60 % w/w of the composition. In other preferred solvent is hexadecane.

Other preferred solvents are deep eutectic solvents, which are classified as types of ionic solvents with special properties. These solvent systems are formed from a eutectic mixture of Lewis or Brønsted acids and bases and can contain a variety of anionic and/or cationic species.

A preferred solvent is an amphiphilic solvent. An amphiphile is a chemical compound possessing both hydrophilic and lipophilic properties. Amphiphilic solvents are capable of solubilizing the terpenoid/phenolic compounds in the aqueous layer of a biphasic mixture. Preferred amphiphilic solvents of the composition of the invention include propylene glycol, propylene glycol n-butyl ether, propylene glycol methyl ether acetate, propylene glycol methyl ether, dipropylene glycol n-propyl ether, ethylene glycol methyl ether and hexylene glycol, or combinations thereof.

The solvent of the inventive is an alpha-omega alkyl diol, i.e. 1,5-pentanediol. 1,5-pentanediol is a viscous, colorless low molecular weight solvent. In cosmetics and personal care, 1,5-pentanediol is widely used as a moistening agent, and is used in baby products, bath products, eye makeup, cleansing, skin care and hair care products. It also shows interesting antimicrobial-boosting properties. Preferably, in the composition of the present invention, 1,5-pentanediol is present in a concentration of about 30 - 60% w/w or about 40 - 50% w/w in the composition. In especially preferred embodiments, the inventive composition, e.g. the inventive pest repellent composition comprises about 35% w/w or about 40% w/w 1,5-pentanediol.

The inventive composition comprises thymol, vanillin and 1,5-pentanediol. Preferably the inventive composition comprises thymol, CBT-ol, vanillin and 1,5-pentanediol. In especially preferred embodiments of the inventive composition, e.g. the inventive pest repellent composition, the composition comprises
- about 12.5% w/w thymol, about 25% w/w vanillin and about 35% w/w 1,5-pentanediol; or
- about 15 % w/w thymol, about 30% w/w vanillin and about 35% w/w 1,5-pentanediol; or
- about 15% w/w thymol, about 15% w/w vanillin and about 30% w/w 1,5-pentanediol; or
- about 20% w/w thymol, about 40% w/w vanillin and about 40% w/w 1,5-pentanediol; or
- about 15% w/w thymol, about 10% w/w CBT-ol, about 30% w/w vanillin and about 35% w/w 1,5-pentanediol; or
- about 15% w/w thymol, about 15% w/w CBT-ol, about 30% w/w vanillin and about 35% w/w 1,5-pentanediol.

Optionally, any of these embodiments may additionally comprise water or micellar water as a diluent.

In further especially preferred embodiments of the inventive composition, e.g. the inventive pest repellent composition, the composition comprises
- about 12.5% w/w thymol, about 25% w/w vanillin, about 35% w/w 1,5-pentanediol and about 27.5% w/w water or micellar water; or
- about 15 % w/w thymol, about 30% w/w vanillin, about 35% w/w 1,5-pentanediol and about 20% w/w water or micellar water; or
- about 15% w/w thymol, about 15% w/w vanillin, about 30% w/w 1,5-pentanediol and about 40% w/w water or micellar water; or
- about 15% w/w thymol, about 10% w/w CBT-ol, about 30% w/w vanillin, about 35% w/w 1,5-pentanediol and about 10% w/w water or micellar water; or
- about 15% w/w thymol, about 15% w/w CBT-ol, about 30% w/w vanillin, about 35% w/w 1,5-pentanediol and about 5% w/w water or micellar water.

In another embodiment, the inventive composition further comprises a diluent or a fragrance.

In another embodiment of the present invention the pest repellent is solid or liquid. In another embodiment of the present invention the pest repellent is an aqueous composition comprising water, or micellar water as a diluent, wherein the water or micellar water is present in a concentration of at least 1- 80 % w/w, preferably in a concentration of at least 10-60% w/w, more preferably in a concentration of at least 15 -40% w/w, and more preferably in a concentration of at least 20 -30% w/w.

The composition of the invention may be supplied in various forms. Non-limiting examples comprise a cream, a lotion, a spray, an application stick, a gel, a patch, a wipe or a roll-on. Preferred modes of application are as a cream, a lotion, a spray, a wipe or a stick. Most preferably the composition of the invention is provided in a spray bottle, wherein the user preferably sprays a fine mist onto his or her skin or onto textiles or other articles to which pest repellent activity is to be conferred. In one preferred embodiment, the composition may be formulated so as to not require shaking prior to each application or use.

In one embodiment, the present formulation may be supplied as part of an apparatus, e.g. atmospheric distribution unit with ventilation holes suitable for household applications (bedrooms). An electric heating element or an active ventilation element (e.g. mini-fan) may be used to increase air flow through the interior of the unit and promote evaporation and diffusion of the composition to the ambient environment, thus imparting its pest repellent activity to an entire room, e.g. a bedroom.

The inventive composition is effective in repelling pests. For example, the inventive composition is effective in repelling mosquitoes such as *Aedes Aegypti,* and flies, among other insects, as well as ticks, e.g. from human and non-human animal hosts, as well as from agricultural products, such as seeds and crops, in which such pests may feed. The present formulations can be sprayed on or nearby agricultural crops, and, in addition to the activity demonstrated herein in repelling aphids, should also be effective in repelling thrips, white fly, moths and spider mites, among other pests.

The pest repellent composition of the invention may be either solid or liquid. In one embodiment, an aqueous composition of the current pest repellent comprises water, or micellar water. Micellar water comprises a dispersion of micelles - aggregates of amphiphiles or surfactant molecules. In cosmetics and personal care, micellar water can be used as a facial wash, makeup remover and moisturizer. Preferably, in the insect repellent composition of the present invention, micellar water is present in a concentration of about 10 to 80% w/w. More preferably, the composition compromises a mix of 1,5-pentanediol as a solvent and micellar water as a diluent. The weight ratio of 1,5-pentanediol to water or micellar water is preferably between 3:1 and 1:3, and more preferably between 2:1 and 1:1. Further preferred ratios of 1,5-pentanediol to water or micellar water (expressed as the corresponding decimals) is about 0.7, about 0.75, about 1.0, about 1.3 or about 3.0.

The use of 1,5-pentanediol as solvent with thymol and optionally CBT-ol, and vanillin offers a novel pest, e.g. insect, repellent composition that can be safely used by infants and pregnant and lactating women, and it can also be safely applied on animals. The composition of the invention can be administered once, twice, thrice, or even more often per day. Environmentally safe (even to bees) and biodegradable, this novel pest repellent composition can also be used for agricultural crop protection from harmful pests.

In another embodiment, the solvent of the composition of the invention may comprise liposomes. Liposomes are spherical vesicles consisting of one or more phospholipid bilayers that are used as a vehicle for delivery or administration of an active ingredient. Liposomes can be prepared by methods known to the skilled person, e.g. by disrupting biological membranes and reconstituting the disrupted mixture. Liposomes should not be confused with micelles, as the latter is composed of a single monolayer, whereas liposomes comprise one or more lipid bilayers. Liposomes have been used as carriers for different applications in dermatology and cosmetics. The solvent of the composition of the invention is 1,5-pentanediol and may further comprise liposomes, or a combination thereof. It is understood that this option is freely combinable with, and therefore disclosed in conjunction with any of the embodiments disclosed herein, e.g. any of the embodiments. In one embodiment, the composition of the invention comprises 1,5-pentanediol, thymol and optionally CBT-ol, vanillin, and water or micellar water as a diluent. As set out at other points herein, the composition may additionally comprise liposomes.

The inventive composition, e.g. the inventive pest repellent composition, may additionally comprise one or more fragrance enhancers so as to boost the already advantageous effect achieved by the thymol and optionally CBT-ol present in the composition.

In some preferred embodiments, the inventive composition, e.g. the inventive pest repellent composition may comprise one or more fragrance substances, such as those used in cologne, *eau de toilette*, perfume, aftershave, body spray, deodorant and the like. In this way, the inventive composition, e.g. the inventive pest repellent composition, may take the form of a fragrance composition, e.g. a fragranced pest repellent composition. This advantageously combines the advantages described herein in respect of the composition, with other desirable qualities, for instance allowing one to achieve both an attractive fragrance while at the same time advantageously repelling pests. In addition to comprising fragrance agents, such fragranced compositions according to the invention may also comprise fragrance enhancers.

In all embodiments set out herein, it is preferred that all the components in the inventive composition, i.e. thymol, optionally CBT-ol and vanillin, are completely solubilized in the solvent.

### Preparation methods

A further aspect of the invention relates to a method of preparing a composition comprising solubilized thymol and optionally solubilized cembtatriene-ol (CBT-ol), the solubilized stabilizer and the solvent. The method comprises: mixing the thymol, and optionally the CBT-ol, the stabilizer, and the solvent; and dissolving the thymol and optionally the CBT-ol, and the stabilizer in the solvent by incubating the mixture at a temperature and for a duration of time sufficient to solubilize the thymol and optionally the CBT-ol, and the stabilizer in the solvent.

In a preferred embodiment, the composition does not comprise, i.e. lacks, N,N-diethyl-m-toluamide (DEET). In another preferred embodiment, the composition does not comprise, i.e. lacks, 1-(1-Methylpropoxycarbonyl)-2-(2-hydroxyethyl)piperidine (icaridin). In another preferred embodiment, the composition does not comprise, i.e. lacks, 3-[N-butyl-N-acetyl]-aminopropionic acid, ethyl ester (EBAAP). In another preferred embodiment, the composition does not comprise, i.e. lacks, any binary or tertiary combination of DEET, icaridin and EBAAP. In an especially preferred embodiment, the composition does not comprise, i.e. lacks, each of DEET, icaridin and EBAAP. In the context of the present preparation method, then, this means that it is especially preferred that the method does not comprise a step of adding this compound or these compounds. In one preferred embodiment, the method may also comprise further recovering the composition once solubilized. In a further preferred embodiment, the method may further comprise adding water or micellar water to the dissolved mixture of thymol and optionally CBT-ol. Such addition of water or micellar water may take place before or after any possible recovering of the solvent-solubilized mixture.

The inventors have surprisingly found that optimal results may be achieved by adjusting the temperature at which dissolving the thymol and optionally the CBT-ol is carried out, as well as by adjusting the duration of time for which incubation at the adjusted temperature is performed. In the event that the temperature and time of the dissolution is not optimized, the thymol and optionally CBT-ol may not be optimally dissolved, leading to later difficulties in application e.g. for reasons of non-optimal, e.g. heterogeneous, consistency of the composition before, during, and/or following application. While a homogeneous, monophasic solution is preferred, the final composition resulting from the method as discussed herein may also be biphasic, with the active agents, i.e. thymol and optionally CBT-ol partitioning between lipophilic and aqueous phases to various extents depending on the makeup of each of these phases (e.g. concentration of micelles or liposomes in the aqueous phase), and/or depending on the conditions (e.g. conditions relating to temperature and duration, that is incubation time at a particular temperature) under which the dissolution described above is performed. Generally though, it will be most preferred that all ingredients of the composition are present in a homogeneous, monophasic state, and the optimization of the method for the compositions production help ensure that the state can be achieved.

For instance, in making the composition, it is preferred to use pure thymol and optionally pure CBT-ol. These terpenoids have a low natural solubility in just water, posing a challenge for compositions intended for application, as such compositions typically contain at least some, and sometimes a significant amount of water, e.g. pure water or micellar water. In order to address this challenge, the inventors have surprisingly found that, following mixing of the thymol and optionally CBT-ol with the stabilizer and 1,5-pentanediol, dissolution of the thymol and optionally CBT-ol is significantly promoted by heating the solvent to a temperature of about 40-60°C or between 40°C and 60°C, preferably about 45-55°C or between 45°C and 55°C, and most preferably to a temperature of about 50°C. At this temperature, the thymol and optionally CBT-ol, and the stabilizer (if initially solid), dissolve readily in 1,5-pentanediol. At the same time, one must also take care to limit the incubation time at such an elevated temperature to a duration no greater than necessary to solubilize the thymol and optionally CBT-ol, as prolonging incubation time beyond this minimal duration runs the risk of thermally degrading the thymol and optionally CBT-ol and/or the stabilizer, thereby jeopardizing the subsequent advantageous pest repellent effect of the resulting composition. To this end, the inventors have found that a duration of incubation at a temperature as indicated above is advantageously from about 30 seconds to about 2 minutes; or between about 30 seconds and about 2 minutes, preferably about 45 seconds to about 1.5 minutes; or between about 45 seconds and about 1.5 minutes, and most preferably about 1 minute. Thus, heating the mixture of thymol and optionally pure CBT-ol, and a stabilizer, at an appropriate temperature, e.g. about 50°C, for an appropriate time, e.g. about 1 minute, advantageously balances providing sufficient heating to achieve the desired dissolution while avoiding prolonged heat as may disadvantageously attenuate the desired pest repellent effects of the resulting composition.

The inventors have surprisingly found that, dissolving the thymol and optionally CBT-ol, and a stabilizer, in 1,5-pentanediol, according to the above method results in a solution which can then be made aqueous by the addition of e.g. water or micellar water, without the formation of a biphasic mixture. That is, by adhering to the above method, the inventors have found a way of preparing a composition comprising thymol and optionally CBT-ol, the stabilizer and the solvent, which may subsequently be made aqueous to virtually any desired extent while retaining the homogeneity of a monophasic solution which lends itself well to uniform application without the need for shaking prior to application and, for larger industrial, e.g. agricultural application, obviating an additional apparatus to maintain homogeneity, e.g. by stirring, shaking, jiggling and the like.

It is to be understood that the embodiments disclosed above in the context of the inventive compositions *per se,* e.g. relating to specific amounts of thymol, CBT-ol, vanillin, as well as 1,5-pentanediol, apply correspondingly to the present disclosure of corresponding preparation methods. It is only for reasons of brevity that these embodiments are not repeated here, in the context of preparation methods, the skilled person will however understand that this disclosure applies equally to these preparation methods.

An additional aspect of the invention thus also relates to a composition prepared by the above method. A still additional aspect of the invention thus also relates to a composition preparable by the above method. Such a composition clearly differs from, and has an advantage over, comparable mixtures of thymol and optionally CBT-ol, the stabilizer and the solvent not prepared by the above method, especially when such composition is or is rendered aqueous, as other compositions not prepared by the above method will typically not remain uniformly homogeneous. The above method thus has the important advantage of ensuring homogeneity in the resulting composition, even when the composition is subsequently rendered aqueous, e.g. by addition of a diluent such as water or micellar water.

### Uses (reference embodiment)

A further aspect relates to a use of the inventive composition as set out herein in the manufacture of a pest repellent. The use may involve formulating the inventive composition as set out herein in a form suitable for application to a surface from which pests are to be repelled. In one embodiment, the surface may be skin, e.g. human skin. In another embodiment, the surface may be the surface of an article of manufacture, e.g. a fabric or a textile, or an article of clothing, as e.g. set out herein. The skilled person knows how to formulate compositions suitable for application to, or impregnation of, such surfaces or articles. In particular, the inventive composition may be supplied in various forms, non-limiting examples of which comprise a cream, a lotion, a spray, an application stick, a gel, a patch, a wipe or a roll-on. Especially preferred modes of application are as a cream, a lotion, a spray, a wipe or a stick. To this end, the inventive composition may be provided in a spray bottle, wherein the user preferably sprays a fine mist onto his or her skin or onto textiles or other articles to which pest repellent activities to be conferred. In one preferred embodiment, the composition may be formulated so as to not require shaking prior to each application or use.

In a preferred embodiment, the composition does not comprise, i.e. lacks, N,N-diethyl-m-toluamide (DEET). In another preferred embodiment, the composition does not comprise, i.e. lacks, 1-(1-Methylpropoxycarbonyl)-2-(2-hydroxyethyl)piperidine (icaridin). In another preferred embodiment, the composition does not comprise, i.e. lacks, 3-[N-butyl-N-acetyl]-aminopropionic acid, ethyl ester (EBAAP). In another preferred embodiment, the composition does not comprise, i.e. lacks, any binary or tertiary combination of DEET, icaridin and EBAAP. In an especially preferred embodiment, the composition does not comprise, i.e. lacks, each of DEET, icaridin and EBAAP.

A related aspect relates to a use of the inventive composition as set out herein as a pest repellent. As described and demonstrated herein, the inventive compositions allow the achievement of an advantageous pest repellent activity rivaling that of the benchmark standard DEET, yet without the negative, irritating and/or toxic effects associated with of the latter or other common synthetic pest repellents. The avoidance of such unwanted side effects associated with DEET entails many advantages. For example, unlike other compositions currently on the market, the inventive composition is suitable for achieving pest repellent activity in user cohorts of greater sensitivity, e.g. infants, toddlers, young children, lactating and/or breast-feeding women, as well as in, or on inanimate objects or articles with which such sensitive cohorts typically come into contact. Accordingly, a preferred embodiment relates to a use of the inventive composition as set out herein as a pest repellent on sensitive individuals such as newborns, babies, infants, toddlers, young children, lactating women and/or breast-feeding women.

A related preferred embodiment relates to a use of the inventive composition as set out herein as a pest repellent in an agricultural setting. This includes use of the inventive composition as set out herein as a pest repellent on and/or in the vicinity of crops ultimately intended for animal and/or human consumption. This also includes use of the inventive composition as set out herein as a pest repellent on and/or in the vicinity of livestock, e.g. livestock intended for animal and/or human consumption. It is understood here that the benefits that can be achieved by such use include a reduction in diseases borne by pest vectors in humans as well as non-human animals. It is however also understood that such benefits extend to the protection of crops from predation by pests, with an attendant advantageous increase in crop yield leading to a decrease in the amount of crops lost to pest predation.

In view of the above, it is understood that the inventive composition to be employed in the inventive uses is preferably a pest repellent composition. However, even if the inventive composition itself is not already a "pest repellent composition", e.g. because the concentration of active pest repellent ingredients, i.e. thymol and optionally CBT-ol, are present in the composition in a very low concentration, it is to be understood that such composition could still be used to treat a surface to be rendered pest repellent such that the desired pest repellency is achieved. This would for example be possible if a sufficient total amount of the composition is used to treat the desired surface, either all at once or by repeated application so that, cumulatively, a high enough amount of active, pest repellent agent remains on the surface to achieve the desired pest-repellent activity to the desired extent, e.g. for a desired length of time. That is, it is contemplated that a low concentration of active pest repellent agent in the inventive composition may be counterbalanced by an appropriate increase in the amount of the inventive composition applied, such that the desired pest repellency is achieved. Generally, however, for reasons of expediency, it will be preferable that the inventive composition is a pest repellent composition, so that one need treat a surface only once with said composition in order to confer the desired pest repellent characteristics to that surface.

It is to be understood that the embodiments disclosed above in the context of the inventive compositions *per se,* e.g. relating to specific amounts of thymol, CBT-ol, vanillin, as well as 1,5-pentanediol, apply correspondingly to the present corresponding uses. It is only for reasons of brevity that such embodiments are not repeated here, in the context of uses, the skilled person will however understand that this disclosure applies equally to these uses.

### Method of treating an article of manufacture and method of repelling pests

A further aspect relates to a method of treating an article of manufacture with the inventive composition as set out herein (reference embodiment). The method comprises applying an inventive composition as set out herein to the surface of the article of manufacture and/or impregnating the article of manufacture with a composition as set out herein.

In a preferred embodiment, the composition does not comprise, i.e. lacks, N,N-diethyl-m-toluamide (DEET). In another preferred embodiment, the composition does not comprise, i.e. lacks, 1-(1-Methylpropoxycarbonyl)-2-(2-hydroxyethyl)piperidine (icaridin). In another preferred embodiment, the composition does not comprise, i.e. lacks, 3-[N-butyl-N-acetyl]-aminopropionic acid, ethyl ester (EBAAP). In another preferred embodiment, the composition does not comprise, i.e. lacks, any binary or tertiary combination of DEET, icaridin and EBAAP. In an especially preferred embodiment, the composition does not comprise, i.e. lacks, each of DEET, icaridin and EBAAP.

In one embodiment, the article of manufacture is a fabric or textile, e.g. a non-wearable fabric or textile. In certain preferred embodiments, the fabric or textile, e.g. the non-wearable fabric or textile, may be chosen from one or more of the list consisting of: bedding, e.g. a sheet, a pillow case, a comforter, or a blanket; a net, e.g. a mosquito net; a screen, e.g. a mosquito screen; a mattress; a curtain; a rug, e.g. a throw rug; an umbrella; a sun parasol; a sleeping bag; a cot; and a tent.

In a further preferred embodiment, the article of manufacture is an article of clothing. In certain preferred embodiments, the article of clothing may be chosen from one or more of: a handkerchief; a headscarf; a hairband; a hat; a bandanna; a sweatband; a scarf; a shawl; a necktie; a blouse; a shirt, e.g. a T-shirt, a business shirt, a tank top; an undergarment, e.g. an undershirt, underpants, a bra, a corset or a slip; a swimsuit; pants, e.g. shorts, trousers, a skirt, cargo pants, capri pants, jeans; a belt; a sock; a stocking; a legging; tights; a shoe; a sandal, a dress, a skirt; a chador; a burka; a sari; a wrap; a kaftan; a salwar kameez; a lehenga; a churidhar; a dhoti; a sherwani; and jodhpuri.

In a further embodiment, the article of manufacture is an article of furniture. In certain preferred embodiments, the article of furniture may be chosen from one or more of: a bed; a nightstand; a cabinet; a sofa or davenport; an armchair; a table; and a dresser.

A related aspect of the invention relates to a method of repelling a pest, wherein the pest belongs to a class selected from the group consisting of insecta and arachnida.

The method comprises treating a surface of an article to be rendered pest repellent with the inventive composition as set out herein.

In the event said surface is the surface of an article of manufacture, for example a fabric, an article of clothing, a non-wearable textile, a piece of furniture or the like, said treatment may take the form of application of the inventive composition to the surface of said article of manufacture. Depending on the nature of the article of manufacture, said treatment may, alternatively or additionally, take the form of impregnating the article of manufacture with the inventive composition. In the event said surface is a skin surface, said treatment may take the form of application of the inventive composition to the surface of the skin. Suitable and preferred modes of applying the inventive composition are disclosed herein.

In view of the above, it is understood that the inventive composition to be employed in the inventive methods is a pest repellent composition. However, even if the composition itself is not already the inventive "pest repellent composition", e.g. because the concentration of active pest repellent ingredients, i.e. thymol and optionally CBT-ol, are present in the composition in a very low concentration, it is to be understood that such composition could still be used to treat a surface to be rendered pest repellent such that the desired pest repellency is achieved. This would for example be possible if the desired surface is treated with a sufficient total amount of the composition, either all at once or by repeated application so that, cumulatively, a high enough amount of active, pest repellent agent remains on the surface to achieve the desired pest-repellent activity to the desired extent, e.g. for a desired length of time. That is, it is contemplated that a low concentration of active pest repellent agent in the composition may be counterbalanced by an appropriate increase in the amount of the composition applied, such that the desired pest repellency is achieved. Generally, however, the inventive composition is a pest repellent composition, so that one need treat a surface only once with said composition in order to confer the desired pest repellent characteristics to that surface.

It is to be understood that the embodiments disclosed above in the context of the inventive compositions *per se,* e.g. relating to specific amounts of thymol, CBT-ol, vanillin, as well as 1,5-pentanediol, apply correspondingly to the present methods. It is only for reasons of brevity that such embodiments are not repeated here, in the context of methods, the skilled person will however understand that this disclosure applies equally to methods.

### Method of treating an agricultural product and related uses (reference embodiments)

A further related aspect relates to a method of treating an agricultural product with the inventive composition as set out herein. The method comprises applying the inventive composition, e.g. the inventive pest repellent composition to an agricultural product, e.g. a crop. In a preferred embodiment, the composition does not comprise, i.e. lacks, N,N-diethyl-m-toluamide (DEET). In another preferred embodiment, the composition does not comprise, i.e. lacks, 1-(1-Methylpropoxycarbonyl)-2-(2-hydroxyethyl)piperidine (icaridin). In another preferred embodiment, the composition does not comprise, i.e. lacks, 3-[N-butyl-N-acetyl]-aminopropionic acid, ethyl ester (EBAAP). In another preferred embodiment, the composition does not comprise, i.e. lacks, any binary or tertiary combination of DEET, icaridin and EBAAP. In an especially preferred embodiment, the composition does not comprise, i.e. lacks, each of DEET, icaridin and EBAAP.

It is to be understood that an agricultural product may be an agricultural product which is still growing, e.g. still on the field or in the greenhouse, prior to harvest and distribution. The agricultural product may also be the product following harvest. In the broadest sense, the agricultural product may therefore be a crop anywhere in the chain of events from growth, through harvest, to distribution to and purchase by the consumer or manufacturer.

Treatment of an agricultural product with the inventive composition, e.g. the inventive pest repellent composition, has the advantage that pests which would otherwise feed on the agricultural product are deterred from doing so, this increasing the marketable yield of the agricultural product. Pests which may advantageously be deterred from feeding on the agricultural product include Hemipteran pests, e.g. cicadas, aphids, planthoppers, leafhoppers, or shield bugs. Other pests may include e.g. thrips, Lepidopteran, Dipteran, and Coleopteran larvae, spider mites, locusts or crickets. Agricultural products amenable to such treatment include: vegetables and grains such as rice, wheat, soybean, tomato, corn, potatoes and flowering trees and bushes, for example apples, oranges, olives, coconuts, roses and lilies, as well as the harvested produce thereof. The most typical mode of treating an agricultural product with the inventive composition will usually be by spraying, although it is also conceivable to treat the agricultural product with the inventive composition by seed impregnation and or microencapsulation technology. Accordingly, the agricultural product also includes seeds.

The inventors have also surprisingly found that comparative compositions comprising about 20% thymol, about 20% CBT-ol, and about 40% or about 30% 1,5-pentanediol, optionally with the remainder water or micellar water also confer protection against agricultural pests for about 36 hours, again corresponding to the shipping time of many agricultural products from field to market. The inventors have additionally surprisingly found that the inventive compositions comprising about 15% thymol, about 15% CBT-ol, about 30% vanillin, about 40% or about 30% 1,5-pentanediol, respectively, with the remainder being water or micellar water confer an even longer protection against agricultural pests, amounting to about 48 hours. This advantageously extends the duration of pest repellent activity, allowing more time for shipping from field to market while reducing or excluding any loss of agricultural product due to pest predation.

A related aspect relates to use of the inventive composition, e.g. the inventive pest repellent composition, as an agricultural pest repellent. The advantages associated with such a use are set out above in the context of related methods of treating an agricultural product.

It is to be understood that the embodiments disclosed above in the context of the inventive compositions *per se,* e.g. relating to specific amounts of thymol, CBT-ol, vanillin, as well as 1,5-pentanediol, apply correspondingly to the present methods. It is only for reasons of brevity that such embodiments are not repeated here, in the context of methods, the skilled person will however understand that this disclosure applies equally to the present methods.

### The composition for use in medical methods of prevention

A further aspect of the invention relates to the inventive pest repellent composition, for use in a method of preventing pest-born disease. Said method comprises applying the above inventive composition, preferably the above pest repellent composition, to a human or non-human animal.

In a preferred embodiment, the composition does not comprise, i.e. lacks, N,N-diethyl-m-toluamide (DEET). In another preferred embodiment, the composition does not comprise, i.e. lacks, 1-(1-Methylpropoxycarbonyl)-2-(2-hydroxyethyl)piperidine (icaridin). In another preferred embodiment, the composition does not comprise, i.e. lacks, 3-[N-butyl-N-acetyl]-aminopropionic acid, ethyl ester (EBAAP). In another preferred embodiment, the composition does not comprise, i.e. lacks, any binary or tertiary combination of DEET, icaridin and EBAAP. In an especially preferred embodiment, the composition does not comprise, i.e. lacks, each of DEET, icaridin and EBAAP.

Advantages related to repelling pests, many of which are known to be disease-bearing vectors, are described herein. For example, in one preferred embodiment, the pest may advantageously be chosen from the group consisting of: a member of the class *insecta,* for example a mosquito, for example a mosquito of the subfamily *Anophelinae* or *Culicinae*, for example belonging to the genus *Aedeomyia, Aedes, Anopheles, Armigeres, Ayurakitia, Borachinda, Coquillettidia, Culex, Culiseta, Deinocerites, Eretmapodites, Ficalbia, Galindomyia, Haemagogus, Heizmannia, Hodgesia, Isostomyia, Johnbelkinia, Kimia, Limatus, Lutzia, Malaya, Mansonia, Maorigoeldia, Mimomyia, Onirion, Opifex, Orthopodomyia, Psorophora, Runchomyia, Sabethes, Shannoniana, Topomyia, Toxorhynchites, Trichoprosopon, Tripteroides, Udaya, Uranotaenia, Verrallina, or Wyeomyia.* An insect "pest" as used herein may also for example be a flea, for example a flea of the order *Siphonaptera.* An insect "pest" as used herein may also for example be a fly, for example a fly of the order *Diptera.* An insect "pest" as used herein may also for example be an aphid, for example an aphid of the order *Hemiptera,* for example belonging to the suborder *Stemorrhyncha*, for example belonging to the infraorder *Aphidomorpha*, for example belonging to the Superfamily *Aphidoidea.* A "pest" as used herein may also be a member of the class *arachnida,* for example a tick For example belonging to the genus *Amblyomma, Anomalohimalaya, Bothriocroton, Cosmiomma, Comupalpatum, Compluriscutula, Dermacentor, Haemaphysalis, Hyalomma, Ixodes, Margaropus, Nosomma, Rhipicentor, Rhipicephalus, Antricola, Argas, Nothoaspis, Ornithodoros, Otobius* or *Nuttalliella.* A "pest" as used herein may also be a member of the class *arachnida,* for example a chigger or *Trombiculidae*, for example belonging to the genus *Acomatacarus, Afropolonia, Anahuacia, Ascoschoengastia, Axiogastia, Blankaartia, Brunehaldia, Chatia, Cheladonta, Doloisia, Euschoengastia, Eutrombicula, Gahrliepia, Guntherana, Guntheria, Hannemania, Heaslipia, Hirsutiella, Kayella, Leptotrombidium, Microtrombicula, Miyatrombicula, Neoschoengastia, Neotrombicula, Novotrombicula, Omithogastia, Parasecia, Pseudoschoengastia, Schoengastiella, Schoutedenichia, Speleocola, Trombicula* or *Whartonia.*

In a related preferred embodiment, the pest-born disease may advantageously be chosen from the group consisting of: malaria, Lyme disease, Dengue fever, yellow fever, Zika virus, lymphatic filariasis, Japanese encephalitis, West Nile virus, chikungunya, filariasis, tularemia, dirofilariasis, Saint Louis encephalitis, Western equine encephalitis, Eastern equine encephalitis, Venezuelan equine encephalitis, Ross River fever, Barmah Forest fever, La Crosse encephalitis, Crimean-Congo haemorrhagic fever, Relapsing fever, Rickettsial diseases (e.g. spotted fever and Q fever), Tick-bome encephalitis, Tularaemia and plague and Rickettsiosis.

In an especially preferred embodiment, the pest is the *Anopheles* mosquito and the pest-born disease is malaria. In another especially preferred embodiment, the pest is a tick and the pest-born disease is Lyme disease. In another especially preferred embodiment, the pest is Aedes aegypti and the pest-born disease is Dengue fever. In another especially preferred embodiment, the pest is Aedes species and the pest-born disease is Zika virus. In another especially preferred embodiment, the pest is Culex quinquefasciatus, Aedes and Mansonia species and the pest-born disease is lymphatic filariasis. In another especially preferred embodiment, the pest is Culex species and the pest-born disease is Japanese encephalitis.

It is to be understood that the embodiments disclosed above in the context of the inventive compositions *per se,* e.g. relating to specific amounts of thymol, CBT-ol, vanillin, as well as 1,5-pentanediol, apply correspondingly to the present corresponding methods of prevention and medical uses. It is only for reasons of brevity that such embodiments are not repeated here, in the context of methods of prevention and medical uses, the skilled person will however understand that this disclosure applies equally to methods of prevention and medical uses.

### Apparatus (reference embodiment)

A further aspect of the invention relates to an apparatus, preferably a pest control apparatus, said apparatus comprising a main body defining an inner space and comprising at least one vent hole, said main body comprising within said inner space a carrier disposed at one or more locations within said inner space of said main body, said carrier comprising the inventive pest repellent composition set out herein. In a preferred embodiment, the apparatus contains a heating element sufficient to heat the carrier and promote evaporation of the inventive composition comprised therein. For example, the heating element may be an electrical heating element which is activated by plugging the apparatus into an electrical socket. Once evaporated, the inventive composition saturates the air within the inner space, and exits the inner space through the vent hole into the ambient environment. In this way, the ambient environment also becomes saturated with the evaporated inventive composition. In this way, the atmosphere of a room, e.g. a bedroom, may be advantageously saturated with the inventive composition, with the result that pests will leave or avoid entering that room, thus protecting individuals in that room, e.g. individuals sleeping in that bedroom, from predation by such pests.

In a preferred embodiment, the composition does not comprise, i.e. lacks, N,N-diethyl-m-toluamide (DEET). In another preferred embodiment, the composition does not comprise, i.e. lacks, 1-(1-Methylpropoxycarbonyl)-2-(2-hydroxyethyl)piperidine (icaridin). In another preferred embodiment, the composition does not comprise, i.e. lacks, 3-[N-butyl-N-acetyl]-aminopropionic acid, ethyl ester (EBAAP). In another preferred embodiment, the composition does not comprise, i.e. lacks, any binary or tertiary combination of DEET, icaridin and EBAAP. In an especially preferred embodiment, the composition does not comprise, i.e. lacks, each of DEET, icaridin and EBAAP.

It is to be understood that the embodiments disclosed above in the context of the inventive compositions *per se,* e.g. relating to specific amounts of thymol, CBT-ol, vanillin, as well as 1,5-pentanediol, apply correspondingly to the present disclosure of a corresponding apparatus. It is only for reasons of brevity that such embodiments are not repeated here, in the context of an apparatus, the skilled person will however understand that this disclosure applies equally to the apparatus disclosed above.

The following examples illustrate various embodiments of the invention. They are to be understood as merely illustrative, and are not to be construed as restrictive for the scope of the appended claims.

### Examples

### Example 1: Human Skin Testing, Biting Deterrence

BG test cages developed and sold by *Biogents AG* (Regensburg, Germany) are an in-house improvement of conventional test cages for the evaluation of mosquito repellents (Obermayr et al., 2010). The cages have a volume of 27,000 cm³ (41 x 41 x 16 cm). Four sides of a cage are made of acrylic glass, the floor is made of metal sheet and the rear side is covered by a gauze sleeve. The floor sheet is equipped with a test window (size: 56 cm²; 14.8 x 3.8 cm) for the exposure of the treated skin. In between tests, BG cages are connected to a ventilation system that provides clean, warm and humid air (26 ± 1°C, 70 ± 10% relative humidity) to remove remaining host odors and repellent volatiles from the air inside the cage. Each cage is filled with populations of 30 mosquitoes, which are lured out of their rearing cages by a natural stimulus (human hand) to ensure that only host-seeking females are used for the repellent tests.

Female mosquitoes belonging to the genera *Aedes* were reared at Biogents' insectary according to the standard protocol at a temperature of 27.5 ± 0.5°C, a relative humidity of 75 - 85 % and a 12:12 hour photo period. The light period (350 Lux) was set from 8:00 to 20:00. After hatching from the eggs, larvae were kept in a water basin (30 x 30 x 10 cm) filled with a 1:1 mixture of tap- and deionized water with a low oxygen content and fed with fish food flakes (Tetra Min^{®}). Prior to the emergence of the adults, pupae were transferred to a cage (40 x 30 x 20 cm). Adult mosquitoes were provided with sugar solution (10% dextrose) and used at an age of 9 to 14 days for the repellent tests.

Generally, it should be noted that the cage tests assess pest repellent characteristics of a substance or composition under very stringent conditions. For instance, as explained above, mosquitoes are present in the test cages in a very high density which is rarely, if ever, found in the field. Also, test subjects are selected to be naturally appealing to mosquitoes (for reasons not completely understood, mosquitoes are not equally drawn to all hosts). It should therefore be appreciated that any duration of past repellency determined under such stringent conditions must be understood as conservative. That is, under real-life conditions in the field, the duration of pest repellent activity observed for a given substance or composition will generally be longer, normally substantially longer, then that measured under the stringent conditions applied in cage tests.

### Procedure

Prior to an individual repellent efficacy test, one forearm of a volunteer was treated with the composition to be tested, while the other forearm was left untreated. The biting activity of the test mosquitoes was first determined with the untreated forearm of the test person. In order to keep biting pressure on the untreated skin as low as possible, a modified spacer covered with fine mosquito netting was used for control tests. Mosquitoes were still attracted by the skin odors and landed on the net, however they were not able to reach the skin and pierce it.

In order to conclude biting activity, a minimum of 10 landings must be observed within 30 seconds. In the event that biting activity is lower than that, 5 to 10 new mosquitoes are added to the cage or 30 new mosquitoes are used. The exact time until 10 landings were received was measured and documented, and this time value was used for the calculation of the protection percentage on the treated arm. All tested formulations were stored at room temperature. The formulations were applied using the dosage recommended by the WHO (1.67 mg/cm²) and were shaken well before application. The dosage was applied to a defined area on the forearms of the volunteer. Prior to the application, the skin was washed with fragrance-free soap, rinsed with water and wiped with 50% isopropyl alcohol. An area larger than the test window was marked to ensure that the exposed skin was entirely treated with repellent substance. The marked area had a size of ca. 100 cm² and was treated with 170 mg of the repellent composition. The time until first bite (FB) and first confirmed bite (FCB = one bite followed by another one within the same test or in the consecutive test after 30 minutes) was measured and documented. According to the European Chemicals Agency Guidance documents on testing mosquito repellents, the FCB marks the end of complete protection time (CPT) and should be used as criterion for break-off (ECHA, 2017).

### Results

The results of the above study are shown below in Table 1: (only compositions F3 to F7 are according to the invention)

**Table 1: Complete Protection time CPT (min) against Aedes Aegypti with Thymol as active ingredient.**

| **Formulations** | **Compounds (%, w/w)** | | | | **Complete Protection time CPT (min) against *Aedes Aegypti*** |
|---|---|---|---|---|---|
| | Thymol | Vanillin | 1,5-Pentanediol | Water | |
| F0.1 | - | - | 35 | 65 | - |
| F0.2 | - | 30 | 35 | 35 | 2 |
| F1 | 1 | 2 | - | 97 | - |
| F1.1 | 1 | 2 | 20 | 77 | - |
| F2 | 3 | 6 | - | 91 | 10 |
| F2.1 | 3 | 6 | 20 | 71 | 10 |
| F3 | 5 | 10 | 25 | 60 | 60 |
| F4 | 10 | 20 | 30 | 40 | 90 |
| F5 | 12.5 | 25 | 35 | 27.5 | 180 |
| F6* | 15 | 30 | 35 | 20 | 300 |
| F6.1 | 15 | 15 | 30 | 40 | 120 |
| F7 | 20 | 40 | 40 | - | 360 |
| F8 | 40 | - | 40 | 20 | 90 |

As can be seen above in Table 1, a composition containing around 10-20% w/w thymol as active ingredient, provided a CPT between 5 (formulation F6*) and 6 (formulation F7) hrs (this is also illustrated in Figure 1). In that time, the mosquitoes that had contact with the skin were visibly irritated and showed cleaning behavior. In particular, comparison of test formulations F7 and F8 in the above results indicates that the addition of vanillin as a stabilizer allows the amount of active agent thymol to be reduced by half while increasing the CPT fourfold. Similarly, comparison of test formulations F4 and F8 indicates that addition of vanillin as a stabilizer to thymol allows the amount of active agent thymol to be reduced fourfold without compromising the CPT value.

The compositions of the present invention tested here provided effective repellent activity, the duration of the best of which is comparable to that of the traditional benchmark compound DEET, other synthetic compounds as well as many oil-based repellents. The compositions of the invention thus avoid risks of toxicity, especially in sensitive user groups such as infants and lactating women, without compromising repellent efficacy.

### Example 2: Protective effect in Planta

### Procedure

Pest repellent compositions comprising CBT-ol and/or thymol were tested for protective effects on plant crops against various pests including aphids (*Rhopalosiphum padi*)*.* Response to the various formulations was measured in a two-choice colonization experiment. Pest compositions were applied to separated groups of wheat seedlings. The plants were grown in the laboratory at 25°C in a homemade growing chamber for 7 days on cotton wool. Control seedlings were treated with formulations containing no active ingredient. The aphids were distributed evenly at a certain distance to all plants. Aphids that settled on the green parts of each group were counted after 24 h and 48 h.

### Results

The results of the above study are shown below in Tables 2 and 3:

**Table 2: Protection time (hrs) against agricultural pests with CBT-ol as active ingredient (reference example)**

| **Formulation** | **Compounds %, w/w)** | | | | **Protection time (hrs) against agricultural pests** |
|---|---|---|---|---|---|
| | **CBT-ol** | **Vanillin** | **1,5-pentanediol** | **Water** | |
| **G1** | **0.1** | **--** | **2** | **97.9** | **2** |
| **G2** | **0.25** | **--** | **2** | **97.75** | **2** |
| **G3** | **0.5** | **--** | **25** | **74.5** | **5** |
| **G4** | **1** | **2** | **30** | **67** | **10** |
| **G5** | **5** | **10** | **35** | **50** | **24** |
| **G6** | **10** | **20** | **35** | **35** | **36** |
| **G7** | **20** | **--** | **40** | **40** | **24** |
| **G8** | **40** | **--** | **40** | **20** | **36** |

**Table 3: Protection time (hrs) against agricultural pests with Thymol and CBT-ol as active ingredient**

| (only compositions H3-H7 are according to the invention) | | | | | | |
|---|---|---|---|---|---|---|
| **Formulation** | **Compounds %, w/w)** | | | | | **Protection time (hrs) against agricultural pests** |
| | **Thymol** | **CBT-ol** | **Vanillin** | **1,5-pentanediol** | **Water** | |
| **H1** | **1** | **0.1** | **2** | **2** | **94.9** | **2** |
| **H2** | **3** | **0.25** | **6** | **2** | **88.75** | **2** |
| **H3** | **5** | **0.5** | **10** | **25** | **59.5** | **5** |
| **H4** | **10** | **1** | **20** | **30** | **49** | **20** |
| **H5** | **12.5** | **5** | **25** | **35** | **22.5** | **32** |
| **H6** | **15** | **10** | **30** | **35** | **10** | **36** |
| **H7** | **15** | **15** | **30** | **35** | **5** | **48** |
| **H8** | **20** | **20** | **-**- | **30** | **30** | **36** |

As can be seen above in Table 2, an inventive composition containing 1-5% w/w CBT-ol as active ingredient provided a repellent activity in an agricultural setting of about 24 hrs (test formulation G5), while an inventive composition containing 10% w/w CBT-ol as active ingredient increased pest repellant activity in an agricultural setting to 36 hrs (test formulation G6; this is also illustrated in Figure 2). Comparison of the results between test formulations G6 and G7 show that the inclusion of vanillin as a stabilizer together with CBT-ol allows the amount of CBT-ol to be reduced by half, while extending pest repellent activity for an additional 12 hours. This is important, because CBT-ol is more difficult to produce, and is significantly more expensive, than vanillin. Co-formulation of CBT-ol with vanillin as a stabilizer thus entails a significant production and cost advantage, while simultaneously boosting pest repellent effectiveness by a full 50%. Similarly, a comparison of the results between test formulations G6 and G8 show that inclusion of vanillin as a stabilizer in the inventive composition allows the total amount of CBT-ol to be reduced a full fourfold, without compromising pest repellent effectiveness in an agricultural setting.

Further, as can be seen above in Table 3, an inventive composition containing 10-15% w/w thymol and 5-10% w/w CBT-ol as active ingredients provided a repellant activity in an agricultural setting of about 36 hrs (test formulation H6). Keeping the amount of thymol unchanged, and increasing the amount of CBT-ol to 15% w/w in the inventive composition allowed the repellent activity in an agricultural setting to be extended by an additional 12 hours, to about 48 hrs (test formulation H7). Comparison of test formulations H7 and H8 show that inclusion of vanillin as a stabilizer allowed the amounts of both thymol and CBT-ol to be reduced by 25%, while simultaneously boosting overall pest repellent effectiveness in an agricultural setting by a third in the inventive composition H7.

## Claims

1. A pest repellent composition comprising thymol, a stabilizer and a solvent, and further optionally comprising cembratriene-ol (CBT-ol),
wherein the stabilizer is vanillin,
wherein the respective thymol:vanillin weight ratio is between 1:1 - 1:3, preferably 1:2,
wherein the thymol concentration is 5 - 40 % (w/w), preferably 15 - 20 % (w/w),
wherein the solvent is an alpha-omega alkyl diol, and wherein the alpha-omega alkyl diol is 1,5-pentanediol and is present in a concentration of 20 - 70% (w/w).

2. The pest repellent composition according to claim 1, wherein
if CBT-ol is present, the CBT-ol concentration is 0.1 - 40 % (w/w), preferably 0.5 - 20 % (w/w), more preferably 5 - 10 % (w/w).

3. The pest repellent composition according to claim 1 or 2, further comprising a diluent, preferably water or micellar water, and/or a fragrance.

4. The pest repellent composition according to claim 1, comprising
• 12.5% w/w thymol, 25% w/w vanillin, 35% w/w 1,5-pentanediol, and optionally water or micellar water; or
• 15 % w/w thymol, 30% w/w vanillin, 35% w/w 1,5-pentanediol, and optionally water or micellar water; or
• 15% w/w thymol, 15% w/w vanillin, 30% w/w 1,5-pentanediol, and optionally water or micellar water; or
• 20% w/w thymol, 40% w/w vanillin, 40% w/w 1,5-pentanediol, and optionally water or micellar water; or
• 15% w/w thymol, 10% w/w CBT-ol, 30% w/w vanillin, 35% w/w 1,5-pentanediol, and optionally water or micellar water; or
• 15% w/w thymol, 15% w/w CBT-ol, 30% w/w vanillin, 35% w/w 1,5-pentanediol, and optionally water or micellar water; or
• 15 % (w/w) thymol, 5 % (w/w) CBT-ol, 30 % (w/w) vanillin, 35 % (w/w) 1,5-pentanediol, and optionally water or micellar water.

5. The pest repellent composition of any one of claims 1-4, wherein the composition does not comprise N,N-diethyl-m-toluamide (DEET), 1-(1-Methylpropoxycarbonyl)-2-(2-hydroxyethyl)piperidine (icaridin) and/or 3-[N-butyl-N-acetyl]-aminopropionic acid, ethyl ester (EBAAP), preferably wherein the composition does not comprise each of DEET, icaridin and EBAAP.

6. The pest repellent composition according to claim 5, wherein the pest belongs to a class selected from the group consisting of *insecta* and *arachnida.*

7. A method of preparing a composition comprising solubilized thymol, a solubilized stabilizer, an alpha-omega alkyl diol as a solvent, wherein the alpha-omega alkyl diol is 1,5-pentanediol and is present in a concentration of 20 - 70% (w/w), and, optionally, solubilized cembtatriene-ol (CBT-ol), wherein the stabilizer is vanillin, wherein the respective thymol:vanillin weight ratio is between 1:1 - 1:3, preferably 1:2, and wherein the thymol concentration is 5 - 40 % (w/w), preferably 15 - 20% (w/w),
said method comprising
• mixing the thymol, the stabilizer, and the alpha-omega alkyl diol, and, if present, the CBT-ol; and
• dissolving the thymol, the stabilizer, and, if present, CBT-ol in the alpha-omega alkyl diol by incubating the mixture at a temperature and for a duration of time sufficient to solubilize the thymol, the CBT-ol if present, and the stabilizer in the alpha-omega alkyl diol.

8. The method according to claim 7, wherein the method additionally comprises recovering the composition,
and wherein the method preferably additionally comprises adding water or micellar water to the dissolved mixture of thymol, and stabilizer, and, if present, the CBT-ol.

9. The method according to either one of claims 7 or 8, wherein the method excludes adding any of N,N-diethyl-m-toluamide (DEET), 1-(1-Methylpropoxycarbonyl)-2-(2-hydroxyethyl)piperidine (icaridin) and/or 3-[N-butyl-N-acetyl]-aminopropionic acid, ethyl ester (EBAAP) to the composition, preferably wherein the method excludes adding each of DEET, icaridin and EBAAP to the composition.

10. The method according to any one of claims 7-9, wherein said temperature is 40-60°C, preferably 45-55°C, most preferably 50°C, and wherein said duration of time is 30 seconds to 2 minutes, preferably 45 seconds to 1.5 minutes, most preferably 1 minute.

11. A composition prepared by the method of any one of claims 7-10.

12. The composition of any one of claims 1-6 and 11 for use in a method of preventing a pest-borne disease, wherein the method comprises applying the composition to a human or non-human animal.

13. A method of repelling a pest, comprising:
applying an effective repellent amount of the composition of any one of claims 1-6 or 11 to a surface, wherein the surface is a surface of an article; and
repelling the pest, wherein the pest belongs to a class selected from the group consisting of *insecta* and *arachnida.*

## Patentansprüche

1. Schädlingsabwehrzusammensetzung, die Thymol, einen Stabilisator und ein Lösungsmittel umfasst und ferner optional Cembratrien-ol (CBT-ol) umfasst,
wobei der Stabilisator Vanillin ist,
wobei das jeweilige Thymol:Vanillin-Gewichtsverhältnis zwischen 1:1 und 1:3, vorzugsweise 1:2, liegt,
wobei die Thymolkonzentration 5-40 % (Gew./Gew.), vorzugsweise 15-20 % (Gew./Gew.), beträgt,
wobei das Lösungsmittel ein Alpha-Omega-Alkyldiol ist und wobei das Alpha-Omega-Alkyldiol 1,5-Pentandiol ist und in einer Konzentration von 20 - 70 % (Gew./Gew.) vorliegt.

2. Die Schädlingsabwehrzusammensetzung nach Anspruch 1, wobei
falls CBT-ol vorhanden ist, die CBT-ol-Konzentration 0,1 - 40 % (Gew./Gew.) beträgt, vorzugsweise 0,5 - 20 % (Gew./Gew.), noch bevorzugter 5 - 10 % (Gew./Gew.).

3. Die Schädlingsabwehrzusammensetzung nach Anspruch 1 oder 2, die ferner ein Verdünnungsmittel, vorzugsweise Wasser oder Mizellenwasser, und/oder einen Duftstoff umfasst.

4. Die Schädlingsabwehrzusammensetzung nach Anspruch 1, umfassend
• 12,5 % (Gew./Gew.) Thymol, 25 % (Gew./Gew.) Vanillin, 35 % (Gew./Gew.) 1,5-Pentandiol und gegebenenfalls Wasser oder Mizellenwasser; oder
• 15 % (Gew./Gew.) Thymol, 30 % (Gew./Gew.) Vanillin, 35 % (Gew./Gew.) 1,5-Pentandiol und gegebenenfalls Wasser oder Mizellenwasser; oder
• 15 % (Gew./Gew.) Thymol, 15 % (Gew./Gew.) Vanillin, 30 % (Gew./Gew.) 1,5-Pentandiol und gegebenenfalls Wasser oder Mizellenwasser; oder
• 20 % (Gew./Gew.) Thymol, 40 % (Gew./Gew.) Vanillin, 40 % (Gew./Gew.) 1,5-Pentandiol und gegebenenfalls Wasser oder Mizellenwasser; oder
• 15 % (Gew./Gew.) Thymol, 10 % (Gew./Gew.) CBT-ol, 30 % (Gew./Gew.) Vanillin, 35 % (Gew./Gew.) 1,5-Pentandiol und gegebenenfalls Wasser oder Mizellenwasser; oder
• 15 % (Gew./Gew.) Thymol, 15 % (Gew./Gew.) CBT-ol, 30 % (Gew./Gew.) Vanillin, 35 % (Gew./Gew.) 1,5-Pentandiol und gegebenenfalls Wasser oder Mizellenwasser; oder
• 15 % (Gew./Gew.) Thymol, 5 % (Gew./Gew.) CBT-ol, 30 % (Gew./Gew.) Vanillin, 35 % (Gew./Gew.) 1,5-Pentandiol und gegebenenfalls Wasser oder Mizellenwasser.

5. Die Schädlingsabwehrzusammensetzung nach einem der Ansprüche 1 bis 4, wobei die Zusammensetzung kein N,N-Diethyl-m-toluamid (DEET), 1-(1-Methylpropoxycarbonyl)-2-(2-hydroxyethyl)piperidin (Icaridin) und/oder 3-[N-Butyl-N-acetyl]-aminopropionsäure, Ethylester (EBAAP) enthält, wobei die Zusammensetzung vorzugsweise weder DEET noch Icaridin noch EBAAP enthält.

6. Die Schädlingsabwehrzusammensetzung nach Anspruch 5, wobei der Schädling zu einer Klasse gehört, die aus der Gruppe ausgewählt ist, bestehend aus *Insecta* und *Arachnida.*

7. Verfahren zur Herstellung einer Zusammensetzung, die solubilisiertes Thymol, einen solubilisierten Stabilisator, ein Alpha-Omega-Alkyldiol als Lösungsmittel, wobei das Alpha-Omega-Alkyldiol 1,5-Pentandiol ist und in einer Konzentration von 20-70 % (Gew./Gew.) vorliegt, und gegebenenfalls solubilisiertes Cembtatrien-ol (CBT-ol) enthält, wobei der Stabilisator Vanillin ist, wobei das jeweilige Thymol:Vanillin-Gewichtsverhältnis zwischen 1:1 und 1:3, vorzugsweise 1:2, liegt und wobei die Thymolkonzentration 5-40 % (Gew./Gew.), vorzugsweise 15-20 % (Gew./Gew.), beträgt,
wobei das Verfahren umfasst
• das Mischen des Thymols, des Stabilisators und des Alpha-Omega-Alkyldiols sowie, falls vorhanden, des CBT-ols; und
• das Auflösen des Thymols, des Stabilisators und, falls vorhanden, des CBT-ols in dem Alpha-Omega-Alkyldiol durch Inkubieren der Mischung bei einer Temperatur und über einen Zeitraum, die ausreichen, um das Thymol, das CBT-ol, falls vorhanden, und den Stabilisator in dem Alpha-Omega-Alkyldiol zu solubilisieren.

8. Das Verfahren nach Anspruch 7, wobei das Verfahren zusätzlich das Gewinnen der Zusammensetzung umfasst,
und wobei das Verfahren vorzugsweise zusätzlich das Hinzufügen von Wasser oder Mizellenwasser zu der gelösten Mischung aus Thymol, Stabilisator und, falls vorhanden, CBT-ol umfasst.

9. Das Verfahren nach einem der Ansprüche 7 oder 8, wobei das Verfahren die Zugabe von N,N-Diethyl-m-toluamid (DEET), 1-(1-Methylpropoxycarbonyl)-2-(2-hydroxyethyl)piperidin (Icaridin) und/oder 3-[N-Butyl-N-acetyl]-aminopropionsäureethylester (EBAAP) zur Zusammensetzung ausschließt, wobei das Verfahren vorzugsweise die Zugabe von DEET, Icaridin und EBAAP zur Zusammensetzung ausschließt.

10. Das Verfahren nach einem der Ansprüche 7 bis 9, wobei die Temperatur 40 bis 60 °C, vorzugsweise 45 bis 55 °C, am bevorzugtesten 50 °C beträgt und wobei die Zeitdauer 30 Sekunden bis 2 Minuten, vorzugsweise 45 Sekunden bis 1,5 Minuten, am bevorzugtesten 1 Minute beträgt.

11. Zusammensetzung, hergestellt nach dem Verfahren nach einem der Ansprüche 7 bis 10.

12. Die Zusammensetzung nach einem der Ansprüche 1 bis 6 und 11 zur Verwendung in einem Verfahren zur Vorbeugung einer durch Schädlinge übertragenen Krankheit, wobei das Verfahren das Aufbringen der Zusammensetzung auf einen Menschen oder ein nichtmenschliches Tier umfasst.

13. Verfahren zur Abwehr von Schädlingen, umfassend:
das Aufbringen einer wirksamen abwehrenden Menge der Zusammensetzung nach einem der Ansprüche 1 bis 6 oder 11 auf eine Oberfläche, wobei die Oberfläche eine Oberfläche eines Gegenstands ist; und
das Abwehren des Schädlings, wobei der Schädling zu einer Klasse gehört, die aus der Gruppe ausgewählt ist, die aus *Insecta* und *Arachnida* besteht.

## Revendications

1. Composition répulsive pour nuisibles comprenant du thymol, un stabilisant et un solvant, et comprenant en outre facultativement du cembratriène-ol (CBT-ol),
dans laquelle le stabilisant est la vanilline,
dans laquelle le rapport massique respectif thymol:vanilline est compris entre 1:1 et 1:3, et est de préférence 1:2,
dans laquelle la concentration en thymol est de 5 à 40 % (m/m), et de préférence de 15 à 20 % (m/m),
dans laquelle le solvant est un alpha,oméga-alcanediol, et dans laquelle l'alpha,oméga-alcanediol est le 1,5-pentanediol et est présent à une concentration de 20 à 70 % (m/m) .

2. Composition répulsive pour nuisibles selon la revendication 1, dans laquelle, si le CBT-ol est présent, la concentration en CBT-ol est de 0,1 à 40 % (m/m), de préférence de 0,5 à 20 % (m/m), et de préférence encore de 5 à 10 % (m/m).

3. Composition répulsive pour nuisibles selon la revendication 1 ou 2, comprenant en outre un diluant, de préférence de l'eau ou de l'eau micellaire, et/ou un parfum.

4. Composition répulsive pour nuisibles selon la revendication 1, comprenant
• 12,5 % (m/m) de thymol, 25 % (m/m) de vanilline, 35 % (m/m) de 1,5-pentanediol et, facultativement, de l'eau ou de l'eau micellaire ; ou
• 15 % (m/m) de thymol, 30 % (m/m) de vanilline, 35 % (m/m) de 1,5-pentanediol et, facultativement, de l'eau ou de l'eau micellaire ; ou
• 15 % (m/m) de thymol, 15 % (m/m) de vanilline, 30 % (m/m) de 1,5-pentanediol et, facultativement, de l'eau ou de l'eau micellaire ; ou
• 20 % (m/m) de thymol, 40 % (m/m) de vanilline, 40 % (m/m) de 1,5-pentanediol et, facultativement, de l'eau ou de l'eau micellaire ; ou
• 15 % (m/m) de thymol, 10 % (m/m) de CBT-ol, 30 % (m/m) de vanilline, 35 % (m/m) de 1,5-pentanediol et, facultativement, de l'eau ou de l'eau micellaire ; ou
• 15 % (m/m) de thymol, 15 % (m/m) de CBT-ol, 30 % (m/m) de vanilline, 35 % (m/m) de 1,5-pentanediol et, facultativement, de l'eau ou de l'eau micellaire ; ou
• 15 % (m/m) de thymol, 5 % (m/m) de CBT-ol, 30 % (m/m) de vanilline, 35 % (m/m) de 1,5-pentanediol et, facultativement, de l'eau ou de l'eau micellaire.

5. Composition répulsive pour nuisibles selon l'une quelconque des revendications 1 à 4, dans laquelle la composition ne comprend pas de N,N-diéthyl-m-toluamide (DEET), de 1-(1-méthylpropoxycarbonyl)-2-(2-hydroxyéthyl)pipéridine (icaridine) et/ou d'ester éthylique d'acide 3-[N-butyl-N-acétyl]-aminopropionique (EBAAP), de préférence dans laquelle la composition ne comprend pas chacun des composés DEET, icaridine et EBAAP.

6. Composition répulsive pour nuisibles selon la revendication 5, dans laquelle le nuisible appartient à une classe du groupe constitué par Insecta et Arachnida.

7. Procédé de préparation d'une composition comprenant du thymol solubilisé, un stabilisant solubilisé, un alpha,oméga-alcanediol comme solvant, dans lequel l'alpha,oméga-alcanediol est le 1,5-pentanediol et est présent à une concentration de 20 à 70 % (m/m), et, facultativement, du cembratriène-ol solubilisé (CBT-ol), dans lequel le stabilisant est la vanilline, dans lequel le rapport massique respectif thymol:vanilline est compris entre 1:1 et 1:3, et est de préférence 1:2, et dans lequel la concentration en thymol est de 5 à 40 % (m/m), et de préférence de 15 à 20 % (m/m),
ledit procédé comprenant
• le mélange du thymol, du stabilisant et de l'alpha,oméga-alcanediol, et, le cas échéant, du CBT-ol ; et
• la dissolution du thymol, du stabilisant et, le cas échéant, du CBT-ol dans l'alpha,oméga-alcanediol en incubant le mélange à une température et pendant une durée suffisantes pour solubiliser le thymol, le CBT-ol le cas échéant, et le stabilisant dans l'alpha,oméga-alcanediol.

8. Procédé selon la revendication 7,
dans lequel le procédé comprend en outre la récupération de la composition, et
dans lequel le procédé comprend en outre de préférence l'ajout d'eau ou d'eau micellaire au mélange dissous de thymol, de stabilisant et, le cas échéant, de CBT-ol.

9. Procédé selon l'une ou l'autre des revendications 7 et 8, dans lequel le procédé exclut l'ajout de N,N-diéthyl-m-toluamide (DEET), de 1-(1-méthylpropoxycarbonyl)-2-(2-hydroxyéthyl)pipéridine (icaridine) et/ou d'ester éthylique d'acide 3-[N-butyl-N-acétyl]-aminopropionique (EBAAP) à la composition, de préférence dans lequel le procédé exclut l'ajout de chacun des composés DEET, icaridine et EBAAP.

10. Procédé selon l'une quelconque des revendications 7 à 9, dans lequel ladite température est de 40 à 60 °C, de préférence de 45 à 55 °C, et de manière préférée entre toutes de 50 °C, et dans lequel ladite durée est de 30 secondes à 2 minutes, de préférence de 45 secondes à 1,5 minute, et de manière préférée entre toutes de 1 minute.

11. Composition préparée selon le procédé de l'une quelconque des revendications 7 à 10.

12. Composition selon l'une quelconque des revendications 1 à 6 et 11, destinée à être utilisée dans un procédé de prévention d'une maladie transmise par des nuisibles, dans laquelle le procédé comprend l'application de la composition à un être humain ou à un animal non humain.

13. Procédé de répulsion d'un nuisible, comprenant :
l'application d'une quantité efficace du répulsif de la composition selon l'une quelconque des revendications 1 à 6 ou 11 sur une surface, dans lequel la surface est une surface d'un article ; et
la répulsion du nuisible, dans lequel le nuisible appartient à une classe du groupe constitué par Insecta et Arachnida.
